(19) **Europäisches Patentamt / European Patent Office / Office européen des brevets**

(11) **EP 3 562 727 B1**

(12) **FASCICULE DE BREVET EUROPEEN**

(45) Date de publication et mention de la délivrance du brevet:
**27.01.2021 Bulletin 2021/04**

(21) Numéro de dépôt: **17826530.2**

(22) Date de dépôt: **28.12.2017**

(51) Int Cl.:
**B61D 27/00** (2006.01) **B60H 1/32** (2006.01)

(86) Numéro de dépôt international:
**PCT/EP2017/084746**

(87) Numéro de publication internationale:
**WO 2018/122334 (05.07.2018 Gazette 2018/27)**

(54) **PROCÉDÉ D'ALIMENTATION EN AIR À TEMPÉRATURE CONTRÔLÉE D'UNE CABINE DE VÉHICULE TERRESTRE ET VÉHICULE TERRESTRE**

VERFAHREN ZUR ZUFUHR VON LUFT MIT GESTEUERTER TEMPERATUR AN EINER KABINE EINES LANDFAHRZEUGS UND LANDFAHRZEUG

METHOD FOR SUPPLYING AIR AT A CONTROLLED TEMPERATURE TO A CABIN OF A LAND VEHICLE, AND LAND VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2016 FR 1663532**

(43) Date de publication de la demande:
**06.11.2019 Bulletin 2019/45**

(73) Titulaire: **Liebherr-Aerospace Toulouse SAS**
**31200 Toulouse (FR)**

(72) Inventeurs:
• **FRANKENBERGER, Annekathrin**
**31016 Toulouse (FR)**
• **KRAWANJA, Andreas**
**1060 Wien (AT)**
• **MENGELLE, Thierry**
**82170 Pompignan (FR)**

(74) Mandataire: **BARRE LAFORGUE**
**35, rue Lancefoc**
**31000 Toulouse (FR)**

(56) Documents cités:
EP-A2- 1 177 961    DE-B3-102004 063 840
FR-A1- 2 486 210    GB-A- 2 237 373

EP 3 562 727 B1

**Description**

L'invention concerne un procédé d'alimentation en air à température contrôlée d'une cabine de véhicule terrestre -notamment ferroviaire- dans lequel on utilise au moins un dispositif à cycle à air. Elle s'étend à un véhicule terrestre -notamment ferroviaire- comprenant au moins un dispositif à cycle à air.

Dans tout le texte, on adopte la terminologie suivante :

- « véhicule terrestre » désigne tout véhicule de transport à la surface de la terre dans l'atmosphère, et englobe en particulier les véhicules roulant (véhicules ferroviaires roulant sur rails et véhicules routiers), et les navires (véhicules se déplaçant sur l'eau) ; à l'exclusion en particulier des engins volants tels que les aéronefs, les engins spatiaux et les sous-marins pour lesquels les problèmes techniques qui se posent sont très différents, notamment en raison des besoins spécifiques de pressurisation de la cabine,
- « cabine » désigne tout espace clos d'un véhicule dans lequel la température de l'air doit être contrôlée, et englobe en particulier les cabines pour passagers, les postes de pilotage et les soutes à bagages ou à transport de fret à température contrôlée,
- « conditionnement d'air » désigne le fait de contrôler au moins la température de l'air dans une cabine en le refroidissant ou en le réchauffant ; le conditionnement d'air dans une cabine peut également éventuellement permettre de contrôler au moins un autre paramètre de l'air dans la cabine, notamment choisi parmi l'humidité, la pression, un débit d'air entrant dans la cabine, un débit d'air sortant de la cabine.

La plupart des systèmes de contrôle environnemental (souvent désignés par le sigle ECS) permettant la climatisation à bord des véhicules terrestres comportent au moins un dispositif à cycle diphasique (souvent désignée par le sigle VCS), c'est-à-dire comprenant un fluide caloporteur diphasique liquide/vapeur entraîné dans une boucle thermique fermée comprenant au moins un compresseur et un évaporateur, la vaporisation du fluide caloporteur entraînant la production d'une puissance froide permettant le refroidissement d'air de la cabine. Avec ces systèmes, le chauffage est en général réalisé par des réchauffeurs électriques. Il est rarement possible d'envisager un réchauffage par inversion du cycle en pompe à chaleur, compte tenu du fait que les plages de conditions environnementales dans lesquelles le fonctionnement du cycle en pompe à chaleur est possible, sont relativement restreintes, et insuffisantes dans le cadre de l'exploitation à bord d'un véhicule terrestre susceptible de rencontrer des conditions environnementales variées.

Ces systèmes à cycle diphasique présentent l'inconvénient de nécessiter des fluides caloporteurs qui sont halogénocarbonés (chlorofluorocarbures (CFC), hydrochlorofluorocarbures (HCFC), hydrofluorocarbures (HFC)) ou des hydrofluoroléfines (HFO) qui, en raison de leur nocivité pour l'environnement et/ou de leur dangerosité pour l'homme (destruction de la couche d'ozone, fort potentiel de réchauffement global, impératifs de récupération par des structures habilitées, toxicité, risque d'inflammation...), sont appelés à disparaître. En outre, il s'avère que ces cycles diphasiques sont mal adaptés aux températures extérieures élevées, et peuvent s'interrompre dans les conditions environnementales dans lesquelles les besoins de climatisation sont précisément les plus importants. Il en résulte une gêne considérable pour les passagers, voire même des risques en matière de sécurité ou de conservation de marchandises.

En conséquence, le besoin se fait sentir de proposer un procédé et un dispositif d'alimentation en air à température contrôlée pour cabine de véhicule terrestre à base d'un cycle à air monophasique, c'est-à-dire par utilisation uniquement d'air gazeux à titre de fluide caloporteur.

Deux types de solution ont été proposés à cette fin.

Dans un premier type de solution connue (EP 0581237), il a été proposé un dispositif à cycle à air à boucle directe dans lequel l'air frais est comprimé par un premier compresseur électrique, puis passe par un échangeur de chaleur pour son refroidissement intermédiaire avant un deuxième compresseur entraîné par une turbine. À la sortie du deuxième compresseur, l'air passe à travers des échangeurs qui permettent de le refroidir par l'air extérieur, puis à travers un condenseur d'eau avant d'être alimenté à la turbine. L'air détendu par la turbine passe à travers une chambre de mélange antigel, puis à travers un premier condenseur pour refroidir l'air à l'amont de la turbine dans lequel l'eau doit être condensée, puis à travers un deuxième condenseur pour être alimenté dans une chambre de mélange où il peut être mélangé à de l'air de recirculation et/ou à de l'air frais avant d'être alimenté à la cabine via un filtre. Il s'avère que ce premier type de solution n'est cependant pas assez fiable ni robuste en utilisation. En effet, les compresseurs électriques nécessaires pour le premier étage de compression sont des composants délicats qui s'usent rapidement du fait des nombreux arrêts et démarrages dont ils font l'objet en exploitation. En outre, cette solution nécessite une pluralité de machines tournantes (premier étage de compresseur électrique, turbocompresseur, quatre groupes de ventilateurs électriques) encombrantes, lourdes, coûteuses à l'installation et en maintenance, et nécessitant une logique de contrôle relativement complexe.

Dans un deuxième type de solution connu (EP 1177961, EP 1186501) il a été proposé un dispositif à cycle à air à boucle inversée dans lequel un débit d'air à pression atmosphérique est alimenté à l'entrée d'une turbine pour être détendu et refroidi, puis passé à travers un échangeur air/air dans lequel l'échange de frigories se fait avec de l'air pulsé à l'intérieur de la cabine du véhicule grâce à des ventilateurs électriques. L'air détendu est ensuite aspiré par un compresseur dans lequel il est recomprimé à la pression atmosphérique pour être rejeté à l'extérieur.

Ce deuxième type de solution donne globalement satisfaction en termes de fiabilité et de performances, et fait l'objet d'une exploitation depuis plus de 10 ans à bord de trains, notamment en Allemagne. Elle présente cependant l'inconvénient d'un encombrement relativement important, en particulier en hauteur. En effet, le débit d'air dans le cycle du turbocompresseur s'effectuant à une pression inférieure à la pression atmosphérique (typiquement de l'ordre de 0,5 $10^5$ Pa) impose l'utilisation de composants volumineux : tuyaux de grosses sections, volutes de grand diamètre, vitesse de rotation du turbocompresseur relativement faible. Or, cet encombrement en hauteur peut s'avérer particulièrement pénalisant en particulier pour les véhicules ferroviaires dans lesquels les groupes de conditionnement d'air sont en général placés en toiture, et dont la hauteur totale est limitée d'une part pour le passage sous les ponts ou dans les tunnels et d'autre part pour favoriser l'aérodynamique du véhicule. Tel est le cas en particulier pour les trains à grande vitesse.

En outre, dans ces deux types de solution, un réchauffeur électrique, dont le coefficient de performance n'est pas supérieur à 1, doit être placé en aval de l'échangeur air/air pour le chauffage de l'air de la cabine.

DE 102004063840 décrit par ailleurs un procédé et un dispositif de conditionnement d'air pouvant être commutés entre un mode refroidissement et un mode chauffage mais dont les performances énergétiques ne sont pas optimisées.

Le document GB 2 237 373 A décrit également un procédé et un dispositif de conditionnement d'air.

L'invention vise donc à pallier l'ensemble de ces inconvénients.

Elle vise en particulier à proposer un procédé d'alimentation en air à température contrôlée à cycle à air pour cabine de véhicule terrestre présentant un encombrement en hauteur réduit -notamment compatible avec son installation en toiture de véhicules ferroviaires-, et qui soit fiable et robuste, léger, simple, peu coûteux à l'installation et pour sa maintenance, et efficace dans toutes les conditions environnementales pouvant être potentiellement rencontrées.

Elle vise également à proposer un tel procédé entraînant une moindre consommation énergétique du véhicule, et en particulier dans lequel le chauffage de la cabine peut être réalisé avec un coefficient de performance supérieur à 1.

Elle vise également à proposer un tel procédé permettant, à partir d'un même dispositif à cycle à air, de moduler aisément la capacité de production en puissance thermique froide ou chaude en fonction des besoins de l'application, et d'assurer la redondance partielle de la fonction de conditionnement d'air en cas de défaillance partielle. Ainsi, elle vise à proposer un procédé aisément adaptable à un grand nombre de véhicules terrestres différents, présentant des besoins de conditionnement d'air pouvant varier dans une large gamme, sans nécessiter une conception et une fabrication de groupes de conditionnement d'air et de turbomachines spécifiques à chaque application.

L'invention vise également à proposer un véhicule terrestre présentant les mêmes avantages.

L'invention concerne donc un procédé d'alimentation en air à température contrôlée dans une cabine de véhicule terrestre -notamment ferroviaire- dans lequel on utilise au moins un dispositif à cycle à air, comportant :

- au moins un turbocompresseur comprenant :

  ◦ un compresseur rotatif,
  ◦ une turbine rotative,
  ◦ un arbre couplant la turbine et le compresseur de telle sorte que la turbine est apte à entraîner le compresseur en rotation,
  ◦ une entrée d'air du compresseur,
  ◦ une sortie d'air du compresseur délivrant un débit d'air comprimé par le compresseur,
  ◦ une entrée d'air de la turbine agencée pour recevoir un débit d'air comprimé en provenance du compresseur,
  ◦ une sortie d'air de la turbine délivrant un débit d'air froid détendu,

- au moins un échangeur interposé entre la sortie d'air du compresseur et l'entrée d'air de la turbine,

caractérisé en ce que :

- on utilise au moins un turbocompresseur d'au moins un dispositif à cycle à air -notamment chaque turbocompresseur d'au moins un dispositif à cycle à air, plus particulièrement chaque turbocompresseur de chaque dispositif à cycle à air- comportant un moteur électrique couplé au compresseur -notamment interposé sur un arbre entre la turbine et le compresseur- de façon à pouvoir délivrer une puissance mécanique au compresseur,
- l'entrée d'air du compresseur est agencée pour recevoir de l'air à pression supérieure ou égale à la pression atmosphérique.

Dans certains modes de réalisation avantageux un procédé selon l'invention est également caractérisé par tout ou partie des caractéristiques mentionnées ci-après :

- la turbine de chaque turbocompresseur est agencée pour délivrer un débit d'air détendu à pression supérieure ou égale à la pression atmosphérique,
- chaque turbocompresseur de chaque dispositif à cycle à air est associé à un ensemble de conduites et de vannes commandées, adapté pour pouvoir être commandé selon un mode de fonctionnement choisi au moins parmi :

  - un mode de chauffage dans lequel l'air comprimé et réchauffé délivré à la sortie du compresseur du turbocompresseur traverse au moins un premier circuit (« passe chaude ») d'un échangeur de chaleur adapté pour réchauffer un débit d'air d'alimentation de la cabine du véhicule,
  - un mode de refroidissement dans lequel :

    ◦ l'entrée d'air du compresseur est agencée pour recevoir de l'air extérieur au véhicule,
    ◦ la sortie d'air comprimé du compresseur est reliée à au moins un échangeur de chaleur, dit échangeur intermédiaire, délivrant un flux d'air comprimé refroidi par au moins un flux d'air choisi parmi un flux d'air extérieur, un flux d'air vicié à évacuer hors de la cabine, et leurs mélanges,

- l'entrée d'air du compresseur est agencée pour, en mode de refroidissement, recevoir directement de l'air prélevé à l'extérieur du véhicule,
- en mode de refroidissement, le débit d'air froid détendu délivré par la sortie d'air de la turbine est introduit dans la cabine du véhicule, avec mélange avec de l'air de recirculation en provenance de la cabine, et éventuellement avec de l'air frais,
- en mode de chauffage, ledit débit d'air d'alimentation de la cabine du véhicule est formé par au moins un flux d'air choisi parmi un flux d'air extérieur, un flux d'air de recirculation en provenance de la cabine du véhicule, et leurs mélanges, ce flux d'air traversant le deuxième circuit de l'échangeur de chauffage cabine pour être réchauffé,
- dans une première variante en mode de chauffage par pompe à chaleur :

  ◦ l'entrée d'air du compresseur est agencée pour recevoir un débit d'air détendu en provenance de la turbine par l'intermédiaire d'au moins un échangeur de chaleur, dit échangeur intermédiaire de réchauffage, adapté pour réchauffer l'air détendu délivré par la turbine au contact d'au moins un flux d'air - notamment au contact d'un flux d'air- choisi parmi un flux d'air extérieur, un flux d'air vicié à évacuer hors de la cabine, et leurs mélanges,
  ◦ l'air comprimé et réchauffé délivré à la sortie du compresseur du turbocompresseur traverse un premier circuit (« passe chaude ») d'un échangeur de chaleur, dit échangeur de chauffage cabine, adapté pour réchauffer un débit d'air d'alimentation de la cabine du véhicule traversant un deuxième circuit (« passe froide ») de l'échangeur de chauffage cabine, une sortie du premier circuit de l'échangeur de chauffage cabine étant reliée à l'entrée d'air de la turbine,

- dans une deuxième variante en mode de chauffage :
  ◦ ledit ensemble de conduites et de vannes commandées est adapté pour pouvoir être commandé également selon un mode de fonctionnement choisi parmi un mode de chauffage dans lequel :

    ◦ un flux d'air vicié à évacuer de la cabine est alimenté à l'entrée du compresseur du turbocompresseur,
    ◦ l'air comprimé et réchauffé délivré à la sortie du compresseur du turbocompresseur, traverse au moins un échangeur interposé entre la sortie d'air du compresseur d'au moins un turbocompresseur et l'entrée d'air de la turbine du turbocompresseur,
    ◦ et l'air délivré à la sortie de la turbine du turbocompresseur est relié à une bouche de sortie pour être rejeté à l'extérieur,

- la vitesse de rotation du moteur électrique de chaque turbocompresseur est pilotée en fonction d'une puissance thermique de consigne à délivrer à la cabine du véhicule,
- en mode de refroidissement, la vitesse de rotation du moteur électrique de chaque turbocompresseur est pilotée en fonction d'une puissance froide de consigne à la sortie de la turbine,
- en mode de chauffage, la vitesse de rotation du moteur électrique de chaque turbocompresseur est pilotée en fonction d'une puissance chaude de consigne à la sortie du compresseur,
- la vitesse de rotation du moteur électrique de chaque turbocompresseur est pilotée avec une valeur maximum supérieure à 50000 tr/min, notamment avec une valeur maximum comprise entre 50000 tr/min et 100000 tr/min, par exemple de l'ordre de 65000 tr/min,
- l'humidité de l'air comprimé délivré à l'entrée d'air de la turbine est extraite à l'amont de cette entrée d'air ; cette extraction peut être réalisée par une boucle d'extraction d'humidité comprenant successivement un premier circuit (« passe chaude ») d'un échangeur de chaleur réchauffeur recevant le débit d'air comprimé et refroidi à la sortie de l'échangeur intermédiaire de refroidissement, un premier circuit (« passe chaude ») d'un échangeur de chaleur condenseur, un dispositif d'extraction d'eau liquide, un deuxième circuit (« passe froide ») de l'échangeur de chaleur réchauffeur recevant le débit d'air délivré à l'aval du dispositif d'extraction d'eau liquide pour le réchauffer par le débit d'air comprimé alimentant le premier circuit de l'échangeur de chaleur réchauffeur, un deuxième circuit (« passe froide ») de l'échangeur de chaleur condenseur recevant le débit d'air froid détendu délivré par la sortie d'air de la turbine pour refroidir le débit d'air comprimé traversant le premier circuit de l'échangeur de chaleur condenseur de façon à condenser l'humidité présente dans ce débit d'air comprimé,

- on choisit chaque turbocompresseur de telle sorte qu'il présente un diamètre maximum (volute) inférieur à 400 mm, par exemple compris entre 300 mm et 400 mm, notamment de l'ordre de 360 mm,
- on choisit chaque turbocompresseur de telle sorte qu'il présente un poids inférieur à 50 kg, par exemple compris entre 20 kg et 50 kg, notamment de l'ordre de 30 kg.

L'invention s'étend également à un véhicule terrestre -notamment ferroviaire- comprenant au moins un dispositif à cycle à air comportant :

- au moins un turbocompresseur comprenant :

  ∘ un compresseur rotatif,
  ∘ une turbine rotative,
  ∘ un arbre couplant la turbine et le compresseur de telle sorte que la turbine est apte à entraîner le compresseur en rotation,
  ∘ une entrée d'air du compresseur,
  ∘ une sortie d'air du compresseur délivrant un débit d'air comprimé par le compresseur,
  ∘ une entrée d'air de la turbine agencée pour recevoir un débit d'air comprimé en provenance du compresseur,
  ∘ une sortie d'air de la turbine délivrant un débit d'air froid détendu,

- au moins un échangeur interposé entre la sortie d'air du compresseur d'au moins un turbocompresseur et l'entrée d'air de la turbine d'au moins un turbocompresseur,

caractérisé en ce que :

- au moins un turbocompresseur d'au moins un dispositif à cycle à air -notamment chaque turbocompresseur d'au moins un dispositif à cycle à air, plus particulièrement chaque turbocompresseur de chaque dispositif à cycle à air- comporte un moteur électrique couplé au compresseur -notamment interposé sur un arbre entre la turbine et le compresseur- de façon à pouvoir délivrer une puissance mécanique au compresseur,
- l'entrée d'air du compresseur d'au moins un turbocompresseur d'au moins un dispositif à cycle à air -notamment de chaque turbocompresseur d'au moins un dispositif à cycle à air, plus particulièrement de chaque turbocompresseur de chaque dispositif à cycle à air- est agencée pour recevoir de l'air à pression supérieure ou égale à la pression atmosphérique.

Dans certains modes de réalisation avantageux un véhicule selon l'invention est également caractérisé par tout ou partie des caractéristiques mentionnées ci-après :

- la turbine de chaque turbocompresseur est agencée pour délivrer un débit d'air détendu à pression supérieure ou égale à la pression atmosphérique,
- chaque dispositif à cycle à air comporte un ensemble de vannes commandées et de conduites et le véhicule comporte au moins une unité de régulation adaptée pour pouvoir commander chaque dispositif à cycle à air selon un mode de fonctionnement choisi au moins parmi :

  ▪ un mode de chauffage dans lequel l'air comprimé et réchauffé délivré à la sortie du compresseur du turbocompresseur traverse au moins un premier circuit (« passe chaude ») d'un échangeur de chaleur adapté pour réchauffer un débit d'air d'alimentation de la cabine du véhicule,
  ▪ un mode de refroidissement dans lequel :

    ∘ l'entrée d'air du compresseur est agencée pour recevoir de l'air extérieur au véhicule,
    ∘ la sortie d'air comprimé du compresseur est reliée à au moins un échangeur de chaleur, dit échangeur intermédiaire de refroidissement, délivrant un flux d'air comprimé refroidi par au moins un flux d'air choisi parmi un flux d'air extérieur, un flux d'air vicié à évacuer hors de la cabine, et leurs mélanges,

- l'entrée d'air du compresseur est agencée pour, en mode de refroidissement, recevoir directement de l'air prélevé à l'extérieur du véhicule,
- dans une première variante en mode de chauffage par pompe à chaleur :

  ○ l'entrée d'air du compresseur est agencée pour recevoir un débit d'air détendu en provenance de la turbine par l'intermédiaire d'au moins un échangeur de chaleur, dit échangeur intermédiaire de réchauffage, adapté pour réchauffer l'air détendu délivré par la turbine au contact d'un flux d'air choisi parmi un flux d'air extérieur, un flux d'air vicié à évacuer hors de la cabine, et leurs mélanges,
  ○ l'air comprimé et réchauffé délivré à la sortie du compresseur du turbocompresseur traverse un premier circuit (« passe chaude ») d'un échangeur de chaleur, dit échangeur de chauffage cabine, adapté pour réchauffer un débit d'air d'alimentation de la cabine du véhicule traversant un deuxième circuit (« passe froide ») de l'échangeur de chauffage cabine, une sortie du premier circuit de l'échangeur de chauffage cabine étant reliée à l'entrée d'air de la turbine,

- ledit échangeur intermédiaire de refroidissement et ledit au moins un échangeur intermédiaire de réchauffage sont formés d'un seul et même échangeur de chaleur,
- dans une deuxième variante en mode de chauffage :
  ○ ledit ensemble de conduites et de vannes commandées est adapté pour pouvoir être commandé également selon un mode de fonctionnement choisi parmi un mode de chauffage dans lequel :

  ○ un flux d'air vicié à évacuer de la cabine est alimenté à l'entrée du compresseur du turbocompresseur,
  ○ l'air comprimé et réchauffé délivré à la sortie du compresseur du turbocompresseur, traverse au moins un échangeur interposé entre la sortie d'air du compresseur d'au moins un turbocompresseur et l'entrée d'air de la turbine du turbocompresseur,
  ○ et l'air délivré à la sortie de la turbine du turbocompresseur est relié à une bouche de sortie pour être rejeté à l'extérieur,

- il comporte une unité de régulation adaptée pour piloter la vitesse de rotation du moteur électrique de chaque turbocompresseur en fonction d'une puissance thermique de consigne à délivrer à la cabine du véhicule,
- au moins un -notamment chaque- turbocompresseur présente un diamètre maximum (volute) inférieur à 400 mm, par exemple compris entre 300 mm et 400 mm, notamment de l'ordre de 360 mm,
- au moins un -notamment chaque- turbocompresseur présente un poids inférieur à 50 kg, par exemple compris entre 20 kg et 50 kg, notamment de l'ordre de 30 kg,
- au moins un -notamment chaque- turbocompresseur est adapté pour pouvoir être piloté avec une vitesse de rotation maximum supérieure à 50000 tr/min, notamment comprise entre 50000 tr/min et 100000 tr/min, par exemple de l'ordre de 65000 tr/min,
- au moins un -notamment chaque- dispositif à cycle à air comporte un dispositif d'extraction, à l'amont de l'entrée d'air de la turbine, de l'humidité de l'air comprimé délivré, en mode de refroidissement, à la sortie d'air comprimé du compresseur ; dans certains modes de réalisation, ce dispositif extraction comprend une boucle d'extraction d'humidité comprenant successivement un premier circuit (« passe chaude ») d'un échangeur de chaleur réchauffeur relié à l'échangeur intermédiaire de refroidissement pour pouvoir recevoir le débit d'air comprimé (et refroidi) délivré par cet échangeur intermédiaire de refroidissement, un premier circuit (« passe chaude ») d'un échangeur de chaleur condenseur, un dispositif d'extraction d'eau liquide, un deuxième circuit (« passe froide ») de l'échangeur de chaleur réchauffeur reliée au dispositif d'extraction d'eau liquide pour pouvoir recevoir le débit d'air délivré à l'aval du dispositif d'extraction d'eau liquide pour le réchauffer par le débit d'air comprimé alimentant le premier circuit de l'échangeur de chaleur réchauffeur, un deuxième circuit (« passe froide ») de l'échangeur de chaleur condenseur reliée à la sortie de la turbine pour pouvoir recevoir le débit d'air froid détendu délivré par la sortie d'air de la turbine, et refroidir le débit d'air comprimé traversant le premier circuit de l'échangeur de chaleur condenseur de façon à condenser l'humidité présente dans ce débit d'air comprimé.

Ainsi, dans un procédé et un véhicule selon l'invention, le conditionnement d'air est obtenu par au moins un turbocompresseur motorisé dont le compresseur reçoit de l'air à pression supérieure ou égale à la pression atmosphérique. Il en résulte en particulier non seulement une simplification de l'architecture et des composants sans utilisation de fluide calorifique diphasique, mais également la possibilité de réduire considérablement le débit d'air dans la boucle et les dimensions des tuyauteries et des vannes.
En mode de refroidissement, le débit d'air à travers la boucle peut être limité au débit d'air frais à fournir à la cabine. Il est ainsi typiquement divisé par 2 par rapport au débit d'air à travers la boucle inverse du deuxième type de solution de l'état de la technique mentionné ci-dessus. En outre, les pressions dans la boucle passent typiquement d'une valeur de l'ordre de 0,5 10⁵ Pa à une valeur de l'ordre de 3 10⁵ Pa, c'est-à-dire sont multipliées par 6. Il en résulte que le diamètre des conduites de circulation d'air dans la boucle peut être divisé par un facteur typiquement égal à

$$\sqrt{12} = 3,4.$$

Il en résulte également la possibilité d'utiliser la boucle du cycle à air et au moins un turbocompresseur de chaque dispositif à cycle à air en pompe à chaleur pour le chauffage de la cabine, en particulier en inversant le sens de circulation de l'air dans la boucle. Il s'avère en effet que, avec un cycle à air à boucle directe conforme à l'invention, les pressions et les points de fonctionnement du compresseur et de la turbine du turbocompresseur sont sensiblement les mêmes en mode de refroidissement et en mode de chauffage. Il est ainsi possible de générer une puissance thermique chaude avec un rendement supérieur à 1. Les inventeurs ont ainsi déterminé qu'il est possible d'obtenir un coefficient de performance typiquement de l'ordre de 1,25, c'est-à-dire un gain de 25 % à 30 % par rapport à un réchauffeur électrique. Également, la grande majorité des composants utilisés en mode de refroidissement sont réutilisés en mode de chauffage. En outre il est possible de récupérer dans l'échangeur intermédiaire en mode de chauffage les calories de l'air vicié évacué de la cabine, ou en mode de refroidissement les frigories de l'air vicié évacué de la cabine.

Par ailleurs, le refroidissement des échangeurs peut être effectué à l'aide de simples ventilateurs électriques.

Dans certains modes de réalisation d'un procédé et d'un véhicule selon l'invention, chaque dispositif à cycle à air comprend un et un seul turbocompresseur, et peut être configuré et réglé à la fabrication en usine, l'installation à bord du véhicule étant limitée à la connexion des entrées d'air et des sorties d'air du dispositif à cycle à air aux conduites correspondantes du véhicule. Le nombre de dispositif(s) à cycle à air et/ou le nombre de turbocompresseur(s) peut être ajusté en fonction de la puissance thermique requise pour chaque véhicule. En particulier, un véhicule selon l'invention comprend par exemple avantageusement une pluralité de dispositifs à cycle à air - notamment entre 2 et 10 dispositifs à cycle à air comprenant chacun un et un seul turbocompresseur-. Ainsi, les inventeurs ont démontré qu'il est en réalité préférable de prévoir plusieurs dispositifs à cycle à air de plus faibles dimensions incorporant chacun un turbocompresseur motorisé piloté à haute vitesse de rotation qui, bien que plus coûteux et complexe à fabriquer, permet d'obtenir une économie de consommation énergétique et une facilité d'installation à bord d'un véhicule terrestre tel qu'un véhicule ferroviaire, compensant largement le surcoût de fabrication des turbocompresseurs.

L'invention s'étend également à un procédé d'alimentation en air à température contrôlée mis en œuvre dans un véhicule terrestre selon l'invention. Elle s'étend également à un véhicule terrestre dans lequel un procédé d'alimentation en air à température contrôlée selon l'invention est mis en œuvre.

L'invention concerne également un procédé d'alimentation en air à température contrôlée et un véhicule terrestre caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante donnée à titre non limitatif et qui se réfère aux figures annexées dans lesquelles :

- la figure 1 est un schéma synoptique fonctionnel illustrant un dispositif à cycle à air d'un véhicule selon un premier mode de réalisation de l'invention mettant en œuvre un procédé selon un premier mode de réalisation de l'invention en mode de refroidissement,
- la figure 2 est un schéma synoptique fonctionnel du dispositif à cycle à air de la figure 1 en mode de chauffage,
- la figure 3 est un schéma synoptique fonctionnel illustrant un dispositif à cycle à air d'un véhicule selon un deuxième mode de réalisation de l'invention mettant en œuvre un procédé selon un deuxième mode de réalisation de l'invention en mode de refroidissement,
- la figure 4 est un schéma synoptique fonctionnel du dispositif à cycle à air de la figure 3 en mode de chauffage.

Le dispositif à cycle à air selon l'invention représenté sur les figures permet le contrôle environnemental (climatisation par refroidissement ou chauffage) d'une cabine 10 d'un véhicule terrestre selon l'invention. Elle comprend un turbocompresseur 11 motorisé par un moteur électrique 12 entraînant un arbre 13 du turbocompresseur 11 accouplé à une turbine 14 rotative et à un compresseur 15 rotatif. Un tel turbocompresseur 11 motorisé est connu en lui-même et peut faire l'objet de nombreuses variantes de réalisation, notamment en ce qui concerne le type de turbine (axiale ou radiale), le type de compresseur (axial ou radial), le type de moteur électrique, le montage de l'arbre et des paliers (par exemple paliers aérodynamiques ou paliers magnétiques), la disposition relative des roues et/ou du moteur...

Dans le cas d'un véhicule terrestre tel qu'un véhicule ferroviaire, par exemple pour trains à grande vitesse, le turbocompresseur 11 peut avantageusement être choisi avec les caractéristiques suivantes, données uniquement à titre d'exemple non limitatif :

- turbine 14 et compresseur 15 de type radial,
- paliers aérodynamiques ou magnétiques,
- vitesse de rotation maximale comprise entre 50000 tr/min et 100000 tr/min, par exemple de l'ordre de 65000 tr/min,
- taux de compression maximal du compresseur : compris entre 2,5 et 5, notamment de l'ordre de 3,2,
- taux de détente maximal de la turbine : compris entre 2 et 5,
- moteur électrique : de puissance nominale comprise entre 10 kW et 100 kW, notamment de l'ordre de 40 kW,
- diamètre maximum de volute (volute du compresseur 15) inférieur à 500 mm, par exemple compris entre 300 mm et 500 mm, notamment de l'ordre de 360 mm,
- diamètre maximum de roue du compresseur 15 inférieur à 250 mm, par exemple compris entre 100 et 250 mm, notamment de l'ordre de 150 mm,
- poids inférieur à 50 kg, par exemple compris entre 15 kg et 50 kg, notamment de l'ordre de 30 kg,
- diamètre des paliers, notamment dans le cas de paliers à air, compris entre 30 mm et 50 mm, notamment de l'ordre de 40 mm.

La turbine 14 présente une entrée 16 d'air et une sortie 17 d'air détendu et refroidi. Le compresseur 15 comprend une entrée 18 d'air et une sortie 19 d'air comprimé et réchauffé.

Un premier circuit d'un échangeur 20 intermédiaire air/air est interposé entre le compresseur 15 et la turbine 14.

Cet échangeur 20 intermédiaire présente un deuxième circuit d'air alimenté par un flux d'air entraîné par au moins un ventilateur 21 électrique. Ce flux d'air peut être formé d'un flux d'air extérieur ambiant prélevé à l'extérieur du véhicule à température ambiante, d'un flux d'air vicié évacué de la cabine 10 (notamment pour le renouvellement de l'air dans la cabine 10) par une conduite 34, et de leurs mélanges. Le flux d'air passant dans le deuxième circuit d'air de l'échangeur 20 intermédiaire est donc à une température comprise entre la température extérieure au véhicule et la température régnant dans la cabine 10. Après passage dans le deuxième circuit d'air de l'échangeur 20 intermédiaire ce flux d'air est rejeté à l'extérieur.

Une boucle 22 d'extraction d'humidité est interposée entre le premier circuit de l'échangeur 20 intermédiaire et la turbine 14. Cette boucle 22 d'extraction d'humidité comprend successivement à partir de l'échangeur 20 intermédiaire un premier circuit d'un échangeur 23 de chaleur air/air réchauffeur, un premier circuit d'un échangeur 24 de chaleur air/air condenseur, un dispositif 25 d'extraction d'eau liquide, un deuxième circuit du réchauffeur 23 dont la sortie est reliée à l'entrée de la turbine 14. La sortie de la turbine 14 est reliée à un deuxième circuit du condenseur 24, ce dernier alimentant une chambre de mélange 26 alimentant la cabine 10. La chambre de mélange 26 peut recevoir également d'une part un flux d'air de recirculation extrait de la cabine 10 par des ventilateurs électriques 27, 28 et d'autre part un flux d'air frais prélevé à l'extérieur du véhicule, grâce à ces ventilateurs électriques 27, 28 si la puissance thermique froide requise dans la cabine 10 est telle que le débit d'air délivré par la turbine 14 n'est pas suffisant pour couvrir le besoin en renouvellement d'air dans la cabine 10.

La sortie d'air 19 du compresseur 15 peut être reliée à l'entrée d'air 16 de la turbine 14 par l'intermédiaire d'un premier circuit d'un échangeur de chaleur air/air, dit échangeur 32 de chauffage cabine, dont le deuxième circuit est interposé entre la chambre de mélange 26 et la cabine 10.

Chaque échangeur 20, 23, 24, 32 de chaleur permet un transfert de chaleur entre son premier circuit (première « passe ») et son deuxième circuit (deuxième « passe »), selon la différence de température des flux d'air traversant respectivement ces deux circuits.

Une unité 30 de régulation comprenant notamment un automatisme électronique et/ou informatique et un convertisseur de puissance permet le pilotage du moteur 12 électrique à une vitesse de rotation déterminée par un asservissement en fonction de la puissance thermique froide ou chaude devant être délivrée dans la cabine 10, elle-même déterminée en fonction de la température mesurée dans la cabine 10 par un capteur 31 de température, et d'une température de consigne déterminée par un utilisateur du véhicule. Ce pilotage est réalisé par l'unité 30 de régulation selon un asservissement en boucle fermée avec une loi de commande de la vitesse de rotation du moteur en fonction de la température de l'air délivré à l'entrée de la chambre 26 de mélange, elle-même déterminée en fonction de la température de consigne, de la température mesurée dans la cabine 10, et des températures et débits d'air entrant dans la chambre 26 de mélange et sortant de cette dernière. Le débit d'air entrant dans la cabine 10 est mesuré par un capteur 56 de débit. Le débit d'air sortant de la cabine 10 est mesuré par un capteur 57 de débit. Ces débits sont aussi pilotés par l'unité 30 de régulation, en particulier en fonction d'une quantité d'air frais de renouvellement à apporter dans la cabine 10, qui peut être déterminée elle-même grâce à un capteur 37 de dioxyde de carbone dans la cabine 10, permettant d'estimer le taux d'occupation de cette dernière.

Le dispositif à cycle à air comprend également un ensemble de conduites et de vannes commandées, et l'unité 30 de régulation est également reliée à chacune des vannes commandées pour en commander l'état de façon à sélectionner un mode de fonctionnement du dispositif à cycle à air parmi un mode de refroidissement et un mode de chauffage, ce mode de fonctionnement pouvant être sélectionné manuellement par l'utilisateur ou déterminé automatiquement par l'unité 30 de régulation elle-même en fonction notamment de la différence entre la température mesurée à l'intérieur de la cabine 10 et la température extérieure mesurée par un capteur de température 33 relié à l'unité 30 de régulation.

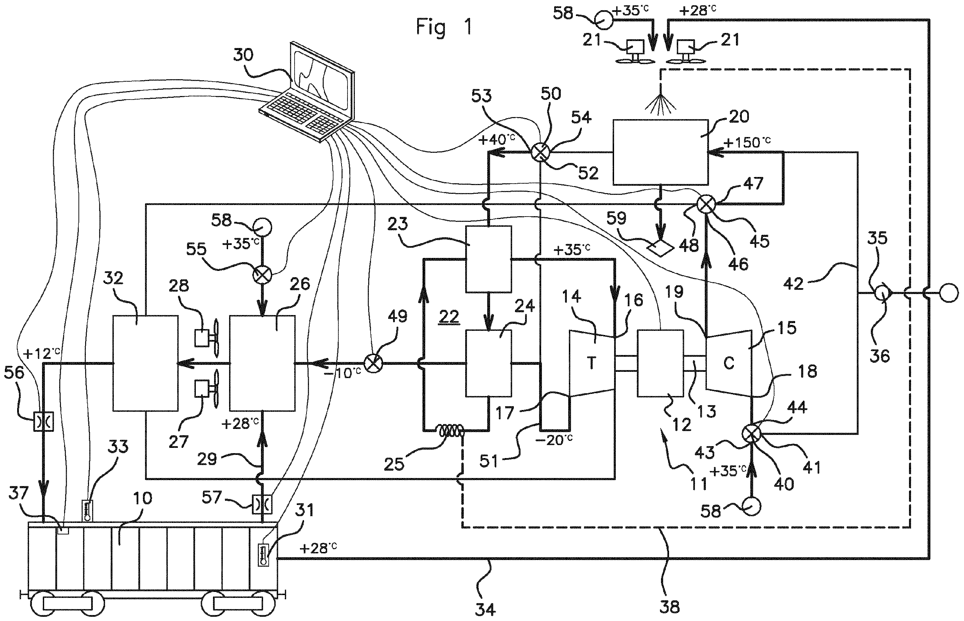

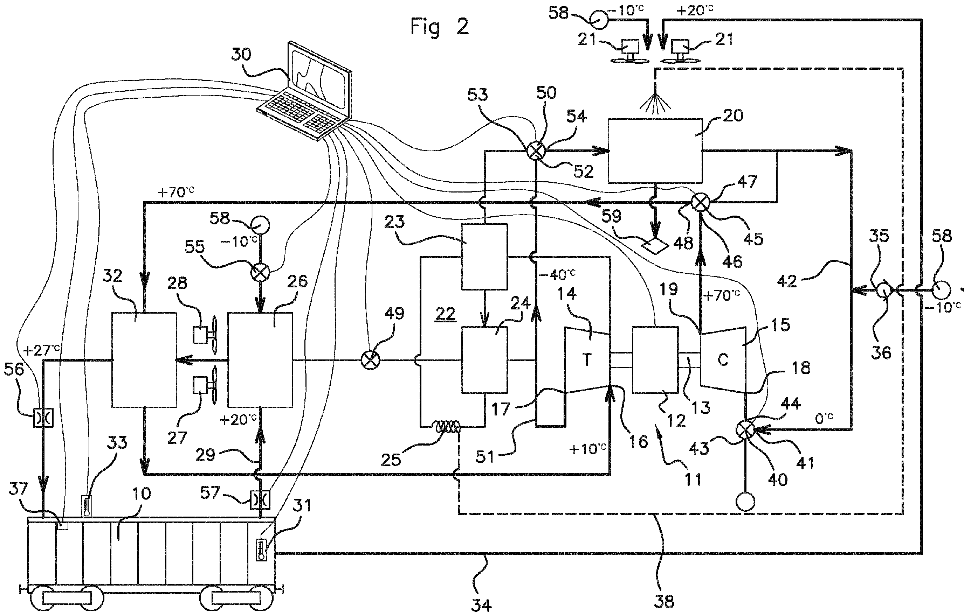

Dans le premier mode de réalisation représenté sur les figures 1 et 2, l'entrée d'air 18 du compresseur 15 comprend une vanne 40 trois voies commandée dont une entrée 41 est reliée par une conduite 42 au premier circuit de l'échangeur 20 intermédiaire, une entrée 43 est alimentée en air frais extérieur 58, et présentant une sortie 44 reliée à l'entrée d'air 18 du compresseur 15.

La sortie d'air 19 du compresseur 15 est reliée à une entrée 46 d'une vanne 45 trois voies commandée dont une sortie 47 est reliée à la conduite 42 aboutissant au premier circuit de l'échangeur 20 intermédiaire (conduite 42 reliant l'entrée d'air 18 du compresseur 15 au premier circuit de l'échangeur 20 intermédiaire), et dont une sortie 48 est reliée au premier circuit de l'échangeur 32 de chauffage cabine.

Une vanne 49 commandée est interposée entre la sortie d'air 17 de la turbine 14 et la chambre 26 de mélange, par exemple entre la sortie du deuxième circuit de l'échangeur 24 de chaleur condenseur et l'entrée de la chambre 26 de mélange.

Une vanne 50 trois voies commandée est interposée entre le premier circuit de l'échangeur 20 intermédiaire et une conduite 51 reliant la sortie d'air 17 de la turbine 14 au premier circuit de l'échangeur 24 de chaleur condenseur. Cette vanne 50 comprend une entrée 52 reliée à la conduite 51 ; une sortie 53 reliée à l'entrée de la boucle 22 d'extraction d'humidité, c'est-à-dire au premier circuit de l'échangeur 23 de chaleur réchauffeur ; et une entrée/sortie 54 reliée au premier circuit de l'échangeur 20 intermédiaire.

Une vanne 55 commandée permet d'alimenter la chambre 26 de mélange en air frais extérieur 58.

La logique de commande d'une telle unité 30 de régulation d'un dispositif à cycle à air est par ailleurs bien connue en elle-même et peut faire l'objet de toutes variantes de réalisation.

Sur les figures, les conduites dans lesquelles l'air circule sont représentées en traits plus épais que celles dans lesquelles l'air ne circule pas, selon le mode de fonctionnement sélectionné.

En mode de refroidissement l'unité 30 de régulation place les différentes vannes 40, 45, 49, 50, 55 commandées dans l'état représenté figure 1.

La vanne 40 relie son entrée 43 à sa sortie 44 et son entrée 41 est fermée. L'entrée d'air 18 du compresseur 15 reçoit de l'air frais extérieur 58 prélevé directement à la pression atmosphérique ou à la pression dynamique résultant du déplacement du véhicule à une pression supérieure à la pression atmosphérique. Il est à noter à ce titre que le dispositif à cycle à air est exempt de tout autre compresseur électrique, la compression de l'air dans la boucle étant obtenue exclusivement et intégralement par le compresseur 15 du turbocompresseur 11.

La vanne 45 relie son entrée 46 à sa sortie 47 reliée au premier circuit de l'échangeur 20 intermédiaire, et son autre sortie 48 est fermée. La sortie d'air 19 du compresseur 15 alimente le premier circuit de l'échangeur 20 intermédiaire qui constitue la passe chaude de cet échangeur 20 intermédiaire, le débit d'air comprimé réchauffé par le compresseur 15 étant refroidi dans cet échangeur 20 intermédiaire par le débit d'air circulant dans le deuxième circuit de l'échangeur 20 intermédiaire, qui constitue la passe froide de ce dernier. Le deuxième circuit d'air de l'échangeur 20 intermédiaire est alimenté par un flux d'air entraîné par au moins un ventilateur 21 électrique. Ce flux d'air peut être choisi parmi un flux d'air extérieur 58 prélevé à l'extérieur du véhicule à température ambiante, d'un flux d'air vicié évacué de la cabine 10 (notamment pour le renouvellement de l'air dans la cabine 10) par la conduite 34, et de leurs mélanges. Le flux d'air passant dans le deuxième circuit d'air de l'échangeur 20 intermédiaire est donc à une température comprise entre la température extérieure au véhicule et la température régnant dans la cabine 10. Après passage dans le deuxième circuit d'air de l'échangeur 20 intermédiaire ce flux d'air est rejeté à l'extérieur par une bouche 59 de sortie.

Le débit d'air comprimé et refroidi à la sortie du premier circuit de l'échangeur 20 intermédiaire est alimenté dans le premier circuit du réchauffeur 23 puis dans le dispositif 25 d'extraction d'humidité puis dans le deuxième circuit du réchauffeur 23 puis à l'entrée d'air 16 de la turbine 14 dans laquelle il est refroidi et détendu. L'échangeur 20 intermédiaire est donc, dans ce mode de refroidissement, un échangeur 20 intermédiaire de refroidissement de l'air comprimé délivré par le compresseur 15. La vanne 50 relie le premier circuit de l'échangeur 20 intermédiaire au premier circuit du réchauffeur 23, et l'entrée 52 de la vanne 50 reliée à la conduite 51 de sortie de la turbine 14 est fermée.

La détente dans la turbine 14 permet également de créer un travail mécanique qui s'ajoute à celui du moteur électrique pour entraîner le compresseur en rotation, et pour amorcer le cycle au démarrage. La turbine 14 permet ainsi d'augmenter le travail mécanique délivré au compresseur 15, la vitesse de rotation du moteur 12 étant ajustée par l'unité 30 de régulation pour obtenir une valeur de température à la sortie de la turbine 14 appropriée au refroidissement de l'air de la cabine 10, typiquement de l'ordre de -10° C.

La vanne 49 est ouverte de sorte que l'air sortant de la turbine 14 alimente la chambre 26 de mélange via le deuxième circuit du condenseur 24. La vanne 55 est supposée fermée pour le point nominal de fonctionnement. Elle peut être plus ou moins ouverte en fonction d'une quantité de débit d'air frais extérieur 58 nécessaire pour alimenter la cabine en dioxygène. Le débit d'air refroidi et détendu par la turbine 14 passant dans le deuxième circuit du condenseur 24 permet d'abaisser la température du débit d'air passant dans le premier circuit de ce condenseur 24 jusqu'à une valeur permettant la condensation de l'eau. L'eau extraite par le dispositif 25 d'extraction d'humidité est avantageusement introduite par une conduite 38 dans le deuxième circuit de l'échangeur 20 intermédiaire pour y être évaporée et contribuer à abaisser la température de refroidissement. Le réchauffeur 23 permet ensuite de récupérer l'énergie calorifique du flux d'air à la sortie de l'échangeur 20 intermédiaire en réchauffant le débit d'air sortant du premier circuit du condenseur 24 avant son introduction dans la turbine 14.

La chambre de mélange 26 est également alimentée en air de recirculation en provenance de la cabine via la conduite 29 par les ventilateurs 27, 28 qui alimentent également la cabine 10 en air provenant de la chambre de mélange 26 via le deuxième circuit de l'échangeur 32 de chauffage cabine qui est inactif, le premier circuit de cet échangeur 32 de chauffage cabine n'étant pas alimenté.

Ainsi, en mode de refroidissement, le dispositif à cycle à air réalise un cycle à air en boucle ouverte directe à partir du turbocompresseur 11 motorisé. La pression dans la boucle correspond à celle délivrée par le compresseur 15, supérieure à la pression atmosphérique, typiquement de l'ordre de 3 $10^5$ Pa.

En mode de chauffage l'unité 30 de régulation place les différentes vannes 40, 45, 49, 50, 55 commandées dans l'état représenté figure 2.

La vanne 40 relie son entrée 41 à sa sortie 44 et son entrée 43 est fermée. La vanne 50 relie son entrée 52 reliée à la sortie d'air 17 de la turbine 14 à l'entrée/sortie 54 reliée au premier circuit de l'échangeur 20 intermédiaire, et la sortie 53 de la vanne 50 reliée au réchauffeur 23 est fermée. La vanne 49 est fermée. L'entrée d'air 18 du compresseur 15 reçoit ainsi un débit d'air détendu en provenance de la turbine 14 par l'intermédiaire du premier circuit de l'échangeur 20 intermédiaire, adapté pour réchauffer l'air détendu et refroidi délivré par la turbine 14 au contact d'un flux d'air traversant le deuxième circuit de l'échangeur 20 intermédiaire, ce dernier étant à une température comprise entre la température extérieure au véhicule et la température régnant dans la cabine 10.

Une conduite 35 est reliée en parallèle à l'entrée d'air 18 du compresseur 15, c'est-à-dire dans l'exemple représenté à la conduite 42, de préférence par l'intermédiaire d'un clapet 36 pour permettre l'introduction d'air frais extérieur 58 dans la boucle par aspiration par le compresseur 15 en fonction des fuites se produisant dans la boucle et dans le turbocompresseur 11. La pression de l'air à l'entrée d'air 18 du compresseur 15 est égale à la pression atmosphérique.

La vanne 45 relie son entrée 46 à sa sortie 48 reliée au premier circuit de l'échangeur 32 de chauffage cabine, et son autre sortie 47 est fermée. La sortie d'air 19 du compresseur 15 est reliée à l'entrée d'air 16 de la turbine 14 par l'intermédiaire du premier circuit de l'échangeur 32 de chauffage cabine, dont le deuxième circuit est interposé entre la chambre de mélange 26 et la cabine 10, de sorte qu'un flux d'air délivré par la chambre de mélange 26 est réchauffé dans cet échangeur 32 de chauffage cabine par les calories de l'air chaud comprimé traversant le premier circuit de l'échangeur 32 de chauffage cabine. Ce flux d'air délivré par la chambre de mélange 26 est formé par le mélange de l'air de recirculation en provenance de la cabine 10 reliée à la chambre de mélange par une conduite 29 et de l'air frais extérieur 58 alimenté dans la chambre de mélange 26 par la vanne 55 qui est ouverte. Les ventilateurs 27, 28 assurent le mélange et le débit de l'air à la sortie de la chambre 26 de mélange.

Après passage dans la turbine 14, l'air est détendu et refroidi à une température très inférieure à la température de la cabine et à la température extérieure, typiquement de l'ordre de -40° C. La détente dans la turbine s'accompagne de la création d'un travail mécanique qui s'ajoute à celui du moteur électrique 12 pour entraîner le compresseur 15 en rotation.

Le premier circuit de l'échangeur 20 intermédiaire air/air est interposé entre la turbine 14 et le compresseur 15. Il reçoit le débit d'air détendu et refroidi en provenance de la turbine 14 pour le réchauffer avant de le délivrer à l'entrée d'air 18 du compresseur 15. Le deuxième circuit d'air de l'échangeur 20 intermédiaire est alimenté par un flux d'air entraîné par au moins un ventilateur 21 électrique. Ce flux d'air peut être choisi parmi un flux d'air extérieur 58 prélevé à l'extérieur du véhicule à température ambiante, d'un flux d'air vicié évacué de la cabine 10 (notamment pour le renouvellement de l'air dans la cabine 10) par la conduite 34, et de leurs mélanges. Le flux d'air passant dans le deuxième circuit d'air de l'échangeur 20 intermédiaire est donc à une température comprise entre la température extérieure au véhicule et la température régnant dans la cabine 10. Après passage dans le deuxième circuit d'air de l'échangeur 20 intermédiaire ce flux d'air est rejeté à l'extérieur par la bouche 59 de sortie. En mode de chauffage, l'échangeur 20 intermédiaire est donc un échangeur 20 intermédiaire de réchauffage.

Les tableaux 1 et 2 ci-après donnent, à titre d'exemple non limitatif, différentes valeurs typiques de débit, de pression et de température aux entrées et sorties d'air de la turbine 14 du compresseur 15 du turbocompresseur 11 pouvant être obtenues dans le premier mode de réalisation de l'invention.

Tableau 1

| Mode de refroidissement | Paramètres | | |
|---|---|---|---|
| | Température | Pression ($10^5$ Pa) | Débit |
| Entrée compresseur | 35°C | 1 | 0,4 kg/s |
| Sortie compresseur | 183°C | 3,1 | 0,4 kg/s |

(suite)

| Mode de refroidissement | Paramètres | | |
|---|---|---|---|
| | Température | Pression ($10^5$ Pa) | Débit |
| Entrée turbine | 35°C | 3,05 | 0,39 kg/s |
| Sortie Turbine | -19°C | 1,05 | 0,39 kg/s |

Tableau 2

| Mode de chauffage | Paramètres | | |
|---|---|---|---|
| | Température | Pression ($10^5$ Pa) | Débit |
| Entrée compresseur | 0°C | 1 | 0,3 kg/s |
| Sortie compresseur | 100°C | 2,5 | 0,3 kg/s |
| Entrée turbine | 10°C | 2,45 | 0,3 kg/s |
| Sortie Turbine | -40°C | 1,05 | 0,3 kg/s |

D'autres valeurs typiques de température sont indiquées sur les figures 1 et 2. Ainsi, en mode de chauffage, le dispositif à cycle à air réalise un cycle en boucle fermée inversée formant une pompe à chaleur avec le turbocompresseur 11, les étages de ce turbocompresseur 11 ayant sensiblement les mêmes conditions de fonctionnement qu'en mode de refroidissement, les circuits de ventilation étant les mêmes que dans le mode de refroidissement. La puissance thermique chaude est ainsi générée avec un rendement supérieur à 1.

En outre, les pressions de fonctionnement dans les différentes parties du dispositif à cycle à air sont toutes supérieures à la pression atmosphérique, ce qui permet de diminuer les sections et les dimensions des conduites et des composants (vannes, volutes et roues du turbocompresseur...), et donc l'encombrement général et le coût de chaque dispositif à cycle à air.

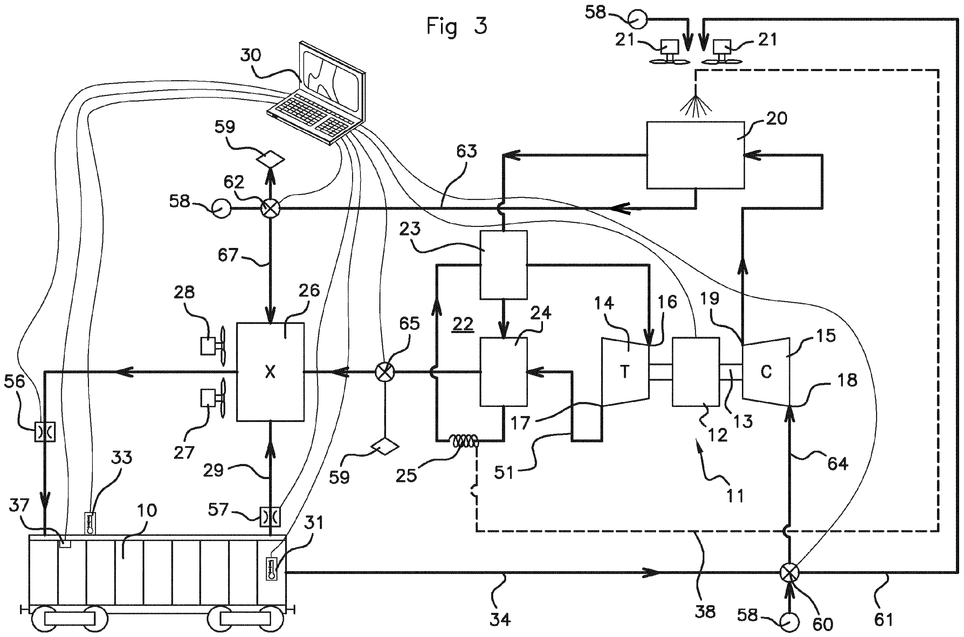

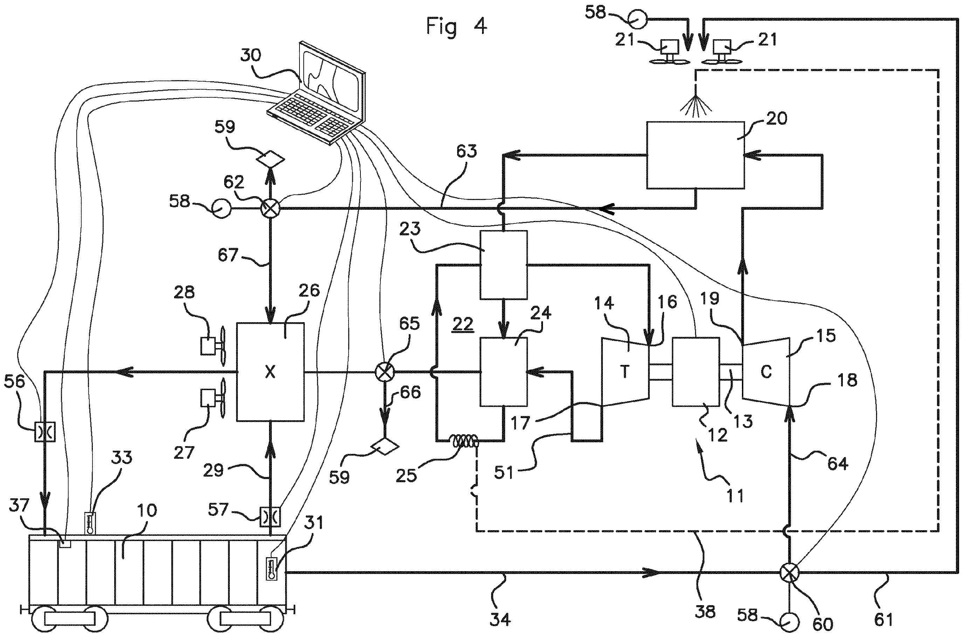

Le deuxième mode de réalisation représenté sur les figures 3 et 4 diffère du premier mode de réalisation par le fait qu'il permet de s'affranchir de l'échangeur 32 de chauffage cabine, l'échangeur 20 intermédiaire étant utilisé pour le chauffage. En outre, ce deuxième mode de réalisation permet également de réduire le nombre de vannes.

La vanne trois voies 40 à l'entrée 18 du compresseur 15 du premier mode de réalisation est remplacée par une vanne quatre voies 60 reliée à une entrée d'air frais extérieur 58, à la conduite 34 prélèvement d'air de la cabine 10, par une conduite 64 à l'entrée 18 du compresseur 15, et à une conduite 61 qui la relie à l'entrée du deuxième circuit de l'échangeur 20 intermédiaire. La vanne 55 à l'entrée de la chambre de mélange 26 du premier mode de réalisation est remplacée par une vanne quatre voies 62 reliée à une entrée 58 d'air frais extérieur, à une conduite 63 reliée à la sortie du deuxième circuit de l'échangeur 20 intermédiaire, à une sortie 59 d'air hors de la cabine 10, et par une conduite 67 à l'entrée de la chambre 26 de mélange. La vanne 49 à la sortie du condenseur 24 du premier mode de réalisation est remplacée par une vanne trois voies 65 présentant une sortie vers la chambre de mélange 26 et une autre sortie vers une bouche 59 d'évacuation de l'air hors de la cabine 10.

En mode de refroidissement l'unité 30 de régulation place les différentes vannes 60, 62, 65 commandées dans l'état représenté figure 3. Le fonctionnement est similaire au mode de refroidissement du premier mode de réalisation.

La vanne 60 relie l'entrée d'air 18 du compresseur 15 à l'entrée d'air frais extérieur 58 à la pression dynamique résultant du déplacement du véhicule à une pression supérieure à la pression atmosphérique. Elle relie également la conduite 34 en provenance de la cabine 10 à la conduite 61 en communication avec le deuxième circuit de l'échangeur 20 intermédiaire.

La sortie d'air 19 du compresseur 15 alimente le premier circuit de l'échangeur 20 intermédiaire qui constitue la passe chaude de cet échangeur 20 intermédiaire, le débit d'air comprimé réchauffé par le compresseur 15 étant refroidi dans cet échangeur 20 intermédiaire par le débit d'air circulant dans le deuxième circuit de l'échangeur 20 intermédiaire, qui constitue la passe froide de ce dernier. Le deuxième circuit d'air de l'échangeur 20 intermédiaire est alimenté par un flux d'air entraîné par au moins un ventilateur 21 électrique. Ce flux d'air peut être choisi parmi un flux d'air extérieur 58 prélevé à l'extérieur du véhicule à température ambiante, d'un flux d'air évacué de la cabine 10 par la conduite 34, et de leurs mélanges. Le flux d'air passant dans le deuxième circuit d'air de l'échangeur 20 intermédiaire est donc à une température comprise entre la température extérieure au véhicule et la température régnant dans la cabine 10. Après passage dans le deuxième circuit d'air de l'échangeur 20 intermédiaire ce flux d'air alimenté par la conduite 63 à la vanne 62 qui la met en communication avec la bouche 59 de sortie, de sorte que ce débit d'air est rejeté à l'extérieur. L'échangeur 20 intermédiaire est donc, dans ce mode de refroidissement, un échangeur 20 intermédiaire de refroidissement de l'air comprimé délivré par le compresseur 15.

Le débit d'air comprimé et refroidi à la sortie du premier circuit de l'échangeur 20 intermédiaire suit le même circuit que dans le premier mode de réalisation jusqu'à la vanne 65 qui délivre le débit d'air refroidi à la chambre 26 de mélange.

La détente dans la turbine 14 permet, là encore, de créer un travail mécanique qui s'ajoute à celui du moteur 12 électrique pour entraîner le compresseur 15 en rotation, et pour amorcer le cycle au démarrage. La turbine 14 permet ainsi d'augmenter le travail mécanique délivré au compresseur 15, la vitesse de rotation du moteur 12 étant ajustée par l'unité 30 de régulation pour obtenir une valeur de température à la sortie de la turbine 14 appropriée au refroidissement de l'air de la cabine 10, typiquement de l'ordre de -10° C.

La vanne 65 est ouverte de sorte que l'air sortant de la turbine 14 alimente la chambre 26 de mélange via le deuxième circuit du condenseur 24. La vanne 62 est supposée fermée entre l'entrée d'air frais 58 et la chambre 26 de mélange pour le point nominal de fonctionnement. Elle peut être plus ou moins ouverte en fonction d'une quantité de débit d'air frais extérieur 58 nécessaire pour alimenter la cabine en dioxygène.

La chambre de mélange 26 est également alimentée en air de recirculation en provenance de la cabine via la conduite 29 par les ventilateurs 27, 28 qui alimentent également la cabine 10 en air provenant de la chambre de mélange 26.

Ainsi, en mode de refroidissement, le dispositif à cycle à air réalise un cycle à air en boucle ouverte directe à partir du turbocompresseur 11 motorisé. La pression dans la boucle correspond à celle délivrée par le compresseur 15, supérieure à la pression atmosphérique, typiquement de l'ordre de 3 10$^5$ Pa.

Par contre, en mode de chauffage, le fonctionnement du dispositif à cycle à air selon le deuxième mode de réalisation est différent de celui du premier mode de réalisation. En mode de chauffage l'unité 30 de régulation place les différentes vannes 60, 62, 65 commandées dans l'état représenté figure 4.

La vanne 60 reçoit de l'air à la conduite 34 en provenance de la cabine 10 et oriente une partie de cet air, correspondant au débit d'air à évacuer de la cabine vers l'extérieur en vue du renouvellement d'air dans la cabine, vers l'entrée 18 d'air du compresseur 15 par la conduite 64. Ce débit d'air suit le même circuit que dans le mode de refroidissement mais, à la sortie du deuxième circuit du condenseur 24, la vanne 65 oriente ce débit d'air vers la bouche 59 de sortie pour le rejeter à l'extérieur du véhicule.

L'air issu du deuxième circuit de l'échangeur 20 intermédiaire a été réchauffé par le débit d'air comprimé délivré par le compresseur 15 dans le premier circuit de cet échangeur 20 intermédiaire. Ce débit d'air réchauffé délivré dans la conduite 63 est orienté par la vanne 62 à l'entrée de la chambre 26 de mélange pour produire les calories permettant le chauffage de la cabine. Ce débit d'air réchauffé provient du débit d'air alimenté à l'entrée du deuxième circuit de l'échangeur 20 intermédiaire qui peut être formé d'un débit d'air frais en provenance d'une entrée 58 d'air frais extérieur et/ou d'un débit d'air de recirculation en provenance de la cabine via la conduite 61 et la vanne 60.

Ainsi, dans ce deuxième mode de réalisation, en mode de chauffage, le circuit d'air principal circulant dans le turbocompresseur 11 et un débit d'air rejeté à l'extérieur, pouvant correspondre débit d'air à extraire de la cabine 10 pour le renouvellement de dioxygène dans la cabine 10, et qui sert à réchauffer le débit d'air alimentant la chambre de mélange 26 et donc la cabine grâce à l'échangeur 20 intermédiaire qui fait office d'échangeur de chauffage.

Il est à noter que dans une variante non représentée de ce deuxième mode de réalisation, l'entrée d'air 18 du compresseur 15 peut être alimentée directement par une prise d'air spécifique en provenance de la cabine 10, par exemple pour le rejet d'air vicié vers l'extérieur, selon un conduit différent de l'air de recirculation et de chauffage passant dans le deuxième circuit de l'échangeur 20 intermédiaire.

Le tableau 3 ci-après donne, à titre d'exemple non limitatif, différentes valeurs typiques de débit, de pression et de température aux entrées et sorties d'air de la turbine 14 du compresseur 15 du turbocompresseur 11 pouvant être obtenues dans le deuxième mode de réalisation de l'invention en mode de chauffage.

Tableau 3

| Mode de chauffage | Paramètres | | |
|---|---|---|---|
| | Température | Pression (10$^5$ Pa) | Débit |
| Entrée compresseur | 20°C | 1 | 0,3 kg/s |
| Sortie compresseur | 130°C | 2,5 | 0,3 kg/s |
| Entrée turbine | 30°C | 2,45 | 0,3 kg/s |
| Sortie Turbine | -20°C | 1 | 0,3 kg/s |

En mode de refroidissement, les valeurs données dans le tableau 1 ci-dessus pour le premier mode de réalisation peuvent être obtenues de façon similaire avec le deuxième mode de réalisation.

Un dispositif à cycle à air d'un véhicule selon l'invention peut en particulier se présenter sous forme d'un groupe de conditionnement d'air (ECS) compact d'un seul tenant intégrant l'ensemble de ses composants.

Un même groupe de conditionnement d'air ECS d'un véhicule selon l'invention peut comporter :

- plusieurs dispositifs à cycle à air, chaque dispositif à cycle à air comportant au moins un turbocompresseur et au moins un jeu d'échangeurs de chaleur pour au moins un circuit d'air ;
- ou un unique dispositif à cycle à air comprenant un unique circuit d'air et un unique jeu d'échangeurs de chaleur et une pluralité de turbocompresseurs, les différents turbocompresseurs étant en communication de fluide avec ce même circuit d'air ;
- ou un unique dispositif à cycle à air avec un unique turbocompresseur en communication de fluide avec une pluralité de circuits d'air et une pluralité de jeux d'échangeurs de chaleur
- ou un unique dispositif à cycle à air comportant un unique turbocompresseur en communication de fluide avec un unique circuit d'air comprenant un unique jeu d'échangeurs de chaleur.

Un tel groupe de conditionnement d'air (ECS) réversible peut être multiplié à bord d'un véhicule terrestre selon l'invention en fonction de la puissance thermique froide ou chaude requise dans la cabine 10. Un même groupe de conditionnement d'air ECS peut être utilisé dans des véhicules terrestres selon l'invention très divers, pour les applications dans des zones très chaudes et/ou très humides, ou au contraire très froides et/ou très sèches. Un véhicule terrestre selon l'invention comprenant une pluralité de dispositifs à cycle à air et/ou une pluralité de groupes de conditionnement d'air permet également d'assurer un maintien au moins partiel de la fonction de contrôle environnemental dans la cabine 10 en cas de panne de l'un des dispositifs à cycle à air et/ou de l'un des groupes de conditionnement d'air. Il est à noter en particulier qu'il est possible d'augmenter la vitesse de rotation de chaque autre turbocompresseur pour pallier la déficience de l'un des turbocompresseurs, si le dimensionnement de l'installation est tel que la vitesse de rotation nominale en fonctionnement des différents turbocompresseurs est inférieure à leur vitesse maximale.

Un véhicule selon l'invention comportant une pluralité de dispositifs à cycle à air comprend avantageusement également une unité centrale de commande permettant de commander les différents dispositifs à cycle à air et leurs unités de régulation respectives. Rien n'empêche de prévoir que les fonctions des unités de régulation des différents dispositifs à cycle à air soient au moins pour partie centralisée dans une telle unité centrale de commande. De même, un véhicule selon l'invention comportant une pluralité de groupes de conditionnement d'air comprend avantageusement également une unité centrale de commande permettant de commander les différents groupes de conditionnement d'air, notamment les différents groupes de conditionnement d'air associés à une même cabine 10 du véhicule.

Il va de soi que l'invention peut faire l'objet de très nombreuses variantes de réalisation par rapport au mode de réalisation décrit ci-dessus et représenté sur les figures. En particulier, au moins une boucle de refroidissement à fluide caloporteur liquide ou diphasique peut être associée en série ou en parallèle sur au moins un circuit d'air d'au moins un dispositif à cycle à air et/ou d'au moins un groupe de conditionnement d'air ECS d'un véhicule selon l'invention, pour le refroidissement de sources de chaleur à bord du véhicule, par exemple de circuits électriques ou électroniques de puissance.

L'invention s'applique tout particulièrement avantageusement à un véhicule ferroviaire, notamment pour les trains de transport de passagers. Elle s'applique néanmoins à toute autres véhicules terrestres dans lesquelles les mêmes problèmes techniques se posent, notamment les véhicules roulants (voitures automobiles, bus, camions,...) et les véhicules se déplaçant sur l'eau (navires).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes.

**Revendications**

**1.** Procédé d'alimentation en air à température contrôlée d'une cabine (10) de véhicule terrestre dans lequel on utilise au moins un dispositif à cycle à air, comportant :

    - au moins un turbocompresseur (11) comprenant :

        ◦ un compresseur (15) rotatif,
        ◦ une turbine (14) rotative,

○ un arbre (13) couplant la turbine et le compresseur de telle sorte que la turbine est apte à entraîner le compresseur en rotation,
○ une entrée d'air (18) du compresseur,
○ une sortie d'air (19) du compresseur délivrant un débit d'air comprimé par le compresseur,
○ une entrée d'air (16) de la turbine agencée pour recevoir un débit d'air comprimé en provenance du compresseur,
○ une sortie d'air (17) de la turbine délivrant un débit d'air froid détendu,

- au moins un échangeur (20, 23, 24, 32) interposé entre la sortie d'air (19) du compresseur d'au moins un turbocompresseur et l'entrée d'air (16) de la turbine d'au moins un turbocompresseur,

**caractérisé en ce que** :

- on utilise au moins un turbocompresseur (11) d'au moins un dispositif à cycle à air comportant un moteur (12) électrique couplé au compresseur (15) de façon à pouvoir délivrer une puissance mécanique au compresseur (15),
- l'entrée d'air (18) du compresseur (15) d'au moins un turbocompresseur d'au moins un dispositif à cycle à air est agencée pour recevoir de l'air à pression supérieure ou égale à la pression atmosphérique,
- chaque turbocompresseur (11) de chaque dispositif à cycle à air est associé à un ensemble de vannes (40, 45, 49, 50, 55) commandées et de conduites, adapté pour pouvoir être commandé selon un mode de fonctionnement choisi au moins parmi :

○ un mode de chauffage par pompe à chaleur dans lequel :

■ l'entrée d'air (18) du compresseur (15) est agencée pour recevoir un débit d'air détendu en provenance de la turbine (14) par l'intermédiaire d'au moins un échangeur de chaleur, dit échangeur (20) intermédiaire de réchauffage, adapté pour réchauffer l'air détendu délivré par la turbine (14) au contact d'au moins un flux d'air choisi parmi un flux d'air extérieur, un flux d'air vicié à évacuer hors de la cabine, et leurs mélanges,
■ l'air comprimé et réchauffé délivré à la sortie (19) du compresseur (15) du turbocompresseur traverse un premier circuit d'un échangeur de chaleur, dit échangeur de chauffage cabine, adapté pour réchauffer un débit d'air d'alimentation de la cabine (10) du véhicule traversant un deuxième circuit de l'échangeur de chauffage cabine, une sortie du premier circuit de l'échangeur de chauffage cabine étant reliée à l'entrée d'air (16) de la turbine,

○ un mode de refroidissement dans lequel :

■ l'entrée d'air (18) du compresseur (15) est agencée pour recevoir de l'air extérieur au véhicule,
■ la sortie d'air (19) comprimé du compresseur (15) est reliée à au moins un échangeur de chaleur, dit échangeur (20) intermédiaire, délivrant un flux d'air comprimé refroidi par au moins un flux d'air choisi parmi un flux d'air extérieur, un flux d'air vicié à évacuer hors de la cabine, et leurs mélanges.

2. Procédé selon la revendication 1 **caractérisé en ce que** la turbine (14) de chaque turbocompresseur est agencée pour délivrer un débit d'air détendu à pression supérieure ou égale à la pression atmosphérique.

3. Procédé selon l'une quelconque des revendications 1 ou 2 **caractérisé en ce que**, en mode de refroidissement, le débit d'air froid détendu délivré par la sortie d'air (17) de la turbine est introduit dans la cabine (10) du véhicule.

4. Procédé selon l'une des revendications 1 à 3 **caractérisé en ce que**, en mode de chauffage, ledit débit d'air d'alimentation de la cabine (10) du véhicule est formé par au moins un flux d'air choisi parmi un flux d'air extérieur, un flux d'air de recirculation en provenance de la cabine du véhicule, et leurs mélanges.

5. Procédé selon l'une des revendications 1 à 4 **caractérisé en ce que** ledit ensemble de vannes (40, 45, 49, 50, 55) commandées et de conduites, est adapté pour pouvoir être commandé également selon un mode de fonctionnement choisi parmi un mode de chauffage dans lequel :

- un flux d'air vicié à évacuer de la cabine est alimenté à l'entrée du compresseur du turbocompresseur,
- l'air comprimé et réchauffé délivré à la sortie (19) du compresseur (15) du turbocompresseur, traverse au moins un échangeur (20, 23, 24) interposé entre la sortie d'air du compresseur d'au moins un turbocompresseur et l'entrée d'air de la turbine du turbocompresseur,
- et l'air délivré à la sortie de la turbine du turbocompresseur est relié à une bouche (59) de sortie pour être rejeté à l'extérieur.

6. Procédé selon l'une des revendications 1 à 5 **caractérisé en ce que** la vitesse de rotation du moteur (12) électrique de chaque turbocompresseur (11) est pilotée en fonction d'une puissance thermique de consigne à délivrer à la cabine (10) du véhicule.

7. Procédé selon l'une des revendications 1 à 6 **caractérisé en ce que** l'humidité de l'air comprimé délivré à l'entrée d'air (16) de la turbine (14) est extraite à l'amont de cette entrée d'air (16).

8. Procédé selon la revendication 7 **caractérisé en ce que** l'extraction de l'humidité est réalisée par une boucle (22) d'extraction d'humidité comprenant un premier circuit d'un échangeur (23) de chaleur réchauffeur recevant le flux d'air comprimé issu de l'échangeur (20) intermédiaire de refroidissement, un premier circuit d'un échangeur (24) de chaleur condenseur, un dispositif (25) d'extraction d'eau liquide, un deuxième circuit de l'échangeur (23) de chaleur réchauffeur recevant le débit d'air délivré à l'aval du dispositif (25) d'extraction d'eau liquide pour le réchauffer par le débit d'air comprimé alimentant le premier circuit de l'échangeur (23) de chaleur réchauffeur, et un deuxième circuit de l'échangeur (24) de chaleur condenseur recevant le débit d'air froid détendu délivré par la sortie d'air (17) de la turbine (14) pour refroidir le débit d'air comprimé traversant le premier circuit de l'échangeur (24) de chaleur condenseur de façon à condenser l'humidité présente dans ce débit d'air comprimé.

9. Véhicule terrestre comprenant au moins un dispositif à cycle à air, comportant :

    - au moins un turbocompresseur (11) comprenant :

        ◦ un compresseur (15) rotatif,
        ◦ une turbine (14) rotative,
        ◦ un arbre (13) couplant la turbine et le compresseur de telle sorte que la turbine est apte à entraîner le compresseur en rotation,
        ◦ une entrée d'air (18) du compresseur (15),
        ◦ une sortie d'air (19) du compresseur (15) délivrant un débit d'air comprimé par le compresseur,
        ◦ une entrée d'air (16) de la turbine (14) agencée pour recevoir un débit d'air comprimé en provenance du compresseur (15),
        ◦ une sortie d'air (17) de la turbine (14) délivrant un débit d'air froid détendu,

    - au moins un échangeur (20, 23, 24, 32) interposé entre la sortie d'air du compresseur d'au moins un turbocompresseur et l'entrée d'air de la turbine d'au moins un turbocompresseur,

**caractérisé en ce que** :

    - au moins un turbocompresseur (11) d'au moins un dispositif à cycle à air comporte un moteur (12) électrique couplé au compresseur (15) de façon à pouvoir délivrer une puissance mécanique au compresseur,
    - l'entrée d'air (18) du compresseur (15) d'au moins un turbocompresseur d'au moins un dispositif à cycle à air est agencée pour recevoir de l'air à pression supérieure ou égale à la pression atmosphérique,
    - chaque turbocompresseur (11) de chaque dispositif à cycle à air est associé à un ensemble de vannes (40, 45, 49, 50, 55) commandées et de conduites, adapté pour pouvoir être commandé selon un mode de fonctionnement choisi au moins parmi :

        ◦ un mode de chauffage par pompe à chaleur dans lequel :

            ▪ l'entrée d'air (18) du compresseur (15) est agencée pour recevoir un débit d'air détendu en provenance de la turbine (14) par l'intermédiaire d'au moins un échangeur de chaleur, dit échangeur (20) intermédiaire de réchauffage, adapté pour réchauffer l'air détendu délivré par la turbine (14) au contact d'au moins un flux d'air choisi parmi un flux d'air extérieur, un flux d'air vicié à évacuer hors de la cabine, et leurs mélanges,
            ▪ l'air comprimé et réchauffé délivré à la sortie (19) du compresseur (15) du turbocompresseur traverse un premier circuit d'un échangeur de chaleur, dit échangeur de chauffage cabine, adapté pour réchauffer un débit d'air d'alimentation de la cabine (10) du véhicule traversant un deuxième circuit de l'échangeur de chauffage cabine, une sortie du premier circuit de l'échangeur de chauffage cabine étant reliée à l'entrée d'air (16) de la turbine

○ un mode de refroidissement dans lequel :

■ l'entrée d'air (18) du compresseur (15) est agencée pour recevoir de l'air extérieur au véhicule,
■ la sortie d'air (19) comprimé du compresseur (15) est reliée à au moins un échangeur de chaleur, dit échangeur (20) intermédiaire, délivrant un flux d'air comprimé refroidi par au moins un flux d'air choisi parmi un flux d'air extérieur, un flux d'air vicié à évacuer hors de la cabine, et leurs mélanges.

**10.** Véhicule selon la revendication 9 **caractérisé en ce que** la turbine de chaque turbocompresseur (11) est agencée pour délivrer un débit d'air détendu à pression supérieure ou égale à la pression atmosphérique.

**11.** Véhicule selon l'une quelconque des revendications 9 ou 10 **caractérisé en ce que** chaque dispositif à cycle à air comporte un ensemble de vannes (40, 45, 49, 50, 55) commandées et de conduites et **en ce qu'**il comporte au moins une unité (30) de régulation adaptée pour pouvoir commander chaque dispositif à cycle à air selon un mode de fonctionnement choisi parmi :

- un mode de chauffage dans lequel l'air comprimé et réchauffé délivré à la sortie (19) du compresseur (15) du turbocompresseur (11) traverse au moins un premier circuit d'un échangeur de chaleur adapté pour réchauffer un débit d'air d'alimentation de la cabine (10) du véhicule,
- un mode de refroidissement dans lequel :

○ l'entrée d'air (18) du compresseur (15) est agencée pour recevoir de l'air extérieur au véhicule,
○ la sortie d'air (19) comprimé du compresseur est reliée à au moins un échangeur de chaleur, dit échangeur (20) intermédiaire de refroidissement, délivrant un flux d'air comprimé refroidi par au moins un flux d'air choisi parmi un flux d'air extérieur, un flux d'air vicié à évacuer hors de la cabine, et leurs mélanges.

**12.** Véhicule selon l'une des revendications 9 à 11 **caractérisé en ce qu'**il comporte une unité (30) de régulation adaptée pour piloter la vitesse de rotation du moteur (12) électrique de chaque turbocompresseur (11) en fonction d'une puissance thermique de consigne à délivrer à la cabine (10) du véhicule.

**13.** Véhicule selon l'une des revendications 9 à 12 **caractérisé en ce que** ledit ensemble de vannes (40, 45, 49, 50, 55) commandées et de conduites, est adapté pour pouvoir être commandé également selon un mode de fonctionnement choisi parmi un mode de chauffage dans lequel :

- un flux d'air vicié à évacuer de la cabine est alimenté à l'entrée du compresseur du turbocompresseur,
- l'air comprimé et réchauffé délivré à la sortie (19) du compresseur (15) du turbocompresseur, traverse au moins un échangeur (20, 23, 24) interposé entre la sortie d'air du compresseur d'au moins un turbocompresseur et l'entrée d'air de la turbine du turbocompresseur,
- et l'air délivré à la sortie de la turbine du turbocompresseur est relié à une bouche (59) de sortie pour être rejeté à l'extérieur.

**Patentansprüche**

**1.** Verfahren zur Zufuhr von Luft mit gesteuerter Temperatur an eine Kabine (10) eines Landfahrzeugs, in dem mindestens eine Luftkreislaufvorrichtung verwendet wird, Folgendes beinhaltend:

- mindestens einen Turbokompressor (11), Folgendes beinhaltend:

○ einen Drehkompressor (15),
○ eine Drehturbine (14),
○ eine Welle (13), die die Turbine und den Kompressor derart koppelt, dass die Turbine imstande ist, den Kompressor in Drehung anzutreiben,
○ einen Lufteingang (18) des Kompressors,
○ einen Luftausgang (19) des Kompressors, der einen Druckluftdurchsatz durch den Kompressor liefert,

◦ einen Lufteingang (16) der Turbine, der angeordnet ist, um einen aus dem Kompressor kommenden Druckluftdurchsatz zu empfangen,
◦ einen Luftausgang (17) der Turbine, der einen entspannten Kaltluftdurchsatz liefert,

- mindestens einen Tauscher (20, 23, 24, 32), der zwischen dem Luftausgang (19) des Kompressors mindestens eines Turbokompressors und dem Lufteingang (16) der Turbine mindestens eines Turbokompressors eingesetzt ist,

**dadurch gekennzeichnet, dass**:

- mindestens ein Turbokompressor (11) mindestens einer Luftkreislaufvorrichtung verwendet wird, die einen Elektromotor (12) beinhaltet, der an den Kompressor (15) gekoppelt ist, um dem Kompressor (15) eine mechanische Leistung liefern zu können,
- der Lufteingang (18) des Kompressors (15) mindestens eines Turbokompressors mindestens einer Luftkreislaufvorrichtung angeordnet ist, um Luft mit einem Druck größer oder gleich dem atmosphärischen Druck zu empfangen,
- jeder Turbokompressor (11) jeder Luftkreislaufvorrichtung einer Einheit von gesteuerten Ventilen (40, 45, 49, 50, 55) und Leitungen zugeordnet ist, die angepasst ist, um entsprechend einem Betriebsmodus gesteuert werden zu können, der mindestens aus Folgendem ausgewählt ist:

◦ einem Heizmodus mit Wärmepumpe, bei dem:

◦ der Lufteingang (18) des Kompressors (15) angeordnet ist, um einen von der Turbine (14) kommenden entspannten Luftdurchsatz über mindestens einen Wärmetauscher, Erwärmungs-Zwischentauscher (20) genannt, zu empfangen, der angepasst ist, um die durch die Turbine (14) gelieferte entspannte Luft in Kontakt mit mindestens einem Luftstrom wieder zu erwärmen, der aus einem Außenluftstrom, einem aus der Kabine auszubringenden Abluftstrom und deren Gemischen ausgewählt wird,
* die am Ausgang (19) des Kompressors (15) des Turbokompressors gelieferte druckbeaufschlagte und erwärmte Luft einen ersten Kreis eines Wärmetauschers, Kabinenheiztauscher genannt, durchquert, der angepasst ist, um einen Zufuhrluftdurchsatz der Kabine (10) des Fahrzeugs zu erwärmen, der einen zweiten Kabinenheiztauscherkreis durchquert, wobei ein Ausgang des ersten Kreises des Kabinenheiztauschers mit dem Lufteingang (16) der Turbine verbunden ist,
◦ einem Kühlmodus, bei dem:

* der Lufteingang (18) des Kompressors (15) angeordnet ist, um Luft von außerhalb des Fahrzeugs zu empfangen,
* der Druckluftausgang (19) des Kompressors (15) mit dem mindestens einen Wärmetauscher, Zwischentauscher (20) genannt, verbunden ist, der einen Druckluftstrom liefert, der durch mindestens einen Luftstrom gekühlt wird, der aus einem Außenluftstrom, einem aus der Kabine auszubringenden Abluftstrom und deren Gemischen ausgewählt wird.

2. Verfahren nach Anspruch 1, **dadurch gekennzeichnet, dass** die Turbine (14) jedes Turbokompressors angeordnet ist, um einen entspannten Luftdurchsatz mit einem Druck größer oder gleich dem atmosphärischen Druck zu liefern.

3. Verfahren nach einem der Ansprüche 1 oder 2, **dadurch gekennzeichnet, dass** im Kühmodus der entspannte Kaltluftdurchsatz, der durch den Luftausgang (17) der Turbine geliefert wird, in die Kabine (10) des Fahrzeugs eingebracht wird.

4. Verfahren nach einem der Ansprüche 1 bis 3, **dadurch gekennzeichnet, dass** der Zufuhrluftdurchsatz der Kabine (10) des Fahrzeugs im Heizmodus durch mindestens einen Luftstrom gebildet wird, der aus einem Außenluftstrom, einem aus der Kabine des Fahrzeugs kommenden Umluftstrom, und deren Gemischen ausgewählt wird.

5. Verfahren nach einem der Ansprüche 1 bis 4, **dadurch gekennzeichnet, dass** die Einheit von gesteuerten Ventilen (40, 45, 49, 50, 55) und Leitungen angepasst ist, um auch entsprechend einem Betriebsmodus gesteuert werden zu können, der aus einem Heizmodus ausgewählt wird, bei dem:

- ein aus der Kabine auszubringender Abluftstrom zum Eingang des Kompressors des Turbokompressors zugeführt wird,

- die am Ausgang (19) des Kompressors (15) des Turbokompressors gelieferte druckbeaufschlagte und erwärmte Luft mindestens einen Tauscher (20, 23, 24) durchquert, der zwischen dem Luftausgang des Kompressors mindestens eines Turbokompressors und dem Lufteingang der Turbine des Turbokompressors eingesetzt ist,

- und die am Ausgang der Turbine des Turbokompressors gelieferte Luft mit einer Ausgangsöffnung (59) verbunden ist, um nach außen abgestoßen zu werden.

6. Verfahren nach einem der Ansprüche 1 bis 5, **dadurch gekennzeichnet, dass** die Drehgeschwindigkeit des Elektromotors (12) jedes Turbokompressors (11) in Abhängigkeit von der Sollwärmeleistung angesteuert wird, die in die Kabine (10) des Fahrzeugs zu liefern ist.

7. Verfahren nach einem der Ansprüche 1 bis 6, **dadurch gekennzeichnet, dass** die Feuchte der Druckluft, die am Lufteingang (16) der Turbine (14) geliefert wird, stromaufwärts dieses Lufteingangs (16) extrahiert wird.

8. Verfahren nach Anspruch 7, **dadurch gekennzeichnet, dass** das Extrahieren der Feuchtigkeit durch eine Feuchte-Extrahierungsschleife (22) erfolgt, die einen ersten Kreis eines Erwärmungswärmetauschers (23), der den aus dem Kühlzwischentauscher (20) stammenden Druckluftstrom empfängt, einen ersten Kreis eines Kondensator-Wärmetauschers (24), eine Extrahierungsvorrichtung (25) von flüssigem Wasser, einen zweiten Kreis des Erwärmungswärmetauschers (23), der den Luftdurchsatz empfängt, der stromabwärts der Extrahierungsvorrichtung (25) von flüssigem Wasser geliefert wird, um ihn durch den Druckluftdurchsatz zu erwärmen, der dem ersten Kreis des Erwärmungswärmetauschers (23) zugeführt wird, und einen zweiten Kreis des Kondensator-Wärmetauschers (24) umfasst, der den entspannten Kaltluftdurchsatz empfängt, der durch den Luftausgang (17) der Turbine (14) geliefert wird, um den Druckluftdurchsatz zu kühlen, der den ersten Kreis des Kondensator-Wärmetauschers (24) durchquert, um die Feuchte zu kondensieren, die in diesem Druckluftdurchsatz vorhanden ist.

9. Landfahrzeug, mindestens eine Luftkreislaufvorrichtung umfassend, die Folgendes beinhaltet:

- mindestens einen Turbokompressor (11), Folgendes umfassend:

◦ einen Drehkompressor (15),
◦ eine Drehturbine (14),
◦ eine Welle (13), die die Turbine und den Kompressor derart koppelt, dass die Turbine imstande ist, den Kompressor in Drehung anzutreiben,
◦ einen Lufteingang (18) des Kompressors (15),
◦ einen Luftausgang (19) des Kompressors (15), der einen Druckluftdurchsatz durch den Kompressor liefert,
◦ einen Lufteingang (16) der Turbine (14), der angeordnet ist, um einen aus dem Kompressor (15) kommenden Druckluftdurchsatz zu empfangen,
◦ einen Luftausgang (17) der Turbine (14), der einen entspannten Kaltluftdurchsatz liefert,

- mindestens einen Tauscher (20, 23, 24, 32), der zwischen dem Luftausgang des Kompressors mindestens eines Turbokompressors und dem Lufteingang der Turbine mindestens eines Turbokompressors eingesetzt ist, **dadurch gekennzeichnet, dass**:
- mindestens ein Turbokompressor (11) mindestens einer Luftkreislaufvorrichtung einen Elektromotor (12) beinhaltet, der an den Kompressor (15) gekoppelt ist, um um dem Kompressor eine mechanische Leistung liefern zu können,
- der Lufteingang (18) des Kompressors (15) mindestens eines Turbokompressors mindestens einer Luftkreislaufvorrichtung angeordnet ist, um Luft mit einem Druck größer oder gleich dem atmosphärischen Druck zu empfangen,
- jeder Turbokompressor (11) jeder Luftkreislaufvorrichtung einer Einheit von gesteuerten Ventilen (40, 45, 49, 50, 55) und Leitungen zugeordnet ist, die angepasst ist, um entsprechend einem Betriebsmodus gesteuert werden zu können, der mindestens aus Folgendem ausgewählt ist:

◦ einem Heizmodus mit Wärmepumpe, bei dem:

\* der Lufteingang (18) des Kompressors (15) angeordnet ist, um einen von der Turbine (14) kommenden entspannten Luftdurchsatz über mindestens einen Wärmetauscher, Erwärmungs-Zwischentauscher (20) genannt, zu empfangen, der angepasst ist, um die durch die Turbine (14) gelieferte entspannte Luft in Kontakt mit mindestens einem Luftstrom zu erwärmen, der aus einem Außenluftstrom, einem aus der Kabine auszubringenden Abluftstrom und deren Gemischen ausgewählt wird,
* die am Ausgang (19) des Kompressors (15) des Turbokompressors gelieferte druckbeaufschlagte und erwärmte Luft einen ersten Kreis eines Wärmetauschers, Kabinenheiztauscher genannt, durchquert, der angepasst ist, um einen Zufuhrluftdurchsatz der Kabine (10) des Fahrzeugs zu erwärmen, der einen zweiten Kabinenheiztauscherkreis durchquert, wobei ein Ausgang des ersten Kreises des Kabinenheiztauschers mit dem Lufteingang (16) der Turbine verbunden ist,

◦ einem Kühlmodus, bei dem:

* der Lufteingang (18) des Kompressors (15) angeordnet ist, um Luft von außerhalb des Fahrzeugs zu empfangen,
* der Druckluftausgang (19) des Kompressors (15) mit mindestens einem Wärmetauscher, Zwischentauscher (20) genannt, verbunden ist, der einen Druckluftstrom liefert, der durch mindestens einen Luftstrom gekühlt wird, der aus einem Außenluftstrom, einem aus der Kabine auszubringenden Abluftstrom und deren Gemischen ausgewählt wird.

10. Fahrzeug nach Anspruch 9, **dadurch gekennzeichnet, dass** die Turbine jedes Turbokompressors (11) angeordnet ist, um einen entspannten Luftdurchsatz mit einem Druck größer oder gleich dem atmosphärischen Druck zu liefern.

11. Fahrzeug nach einem der Ansprüche 9 oder 10, **dadurch gekennzeichnet, dass** jede Luftkreislaufvorrichtung eine Einheit von gesteuerten Ventilen (40, 45, 49, 50, 55) und Leitungen beinhaltet, und dadurch, dass sie mindestens eine Regelungseinheit (30) beinhaltet, die angepasst ist, um jede Luftkreislaufvorrichtung entsprechend einem Betriebsmodus steuern zu können, ausgewählt aus:

- einem Heizmodus, bei dem am Ausgang (19) des Kompressors (15) des Turbokompressors (11) mindestens einen ersten Kreis des Wärmetauschers durchquert, der angepasst ist, um einen Zufuhrluftdurchsatz der Kabine (10) des Fahrzeugs zu erwärmen,
- einem Kühlmodus, bei dem:

° der Lufteingagang (18) des Kompressors (15) angeordnet ist, um Luft von außerhalb des Fahrzeugs zu empfangen,
° der Druckluftausgang (19) des Kompressors mit mindestens einem Wärmetauscher, Kühl-Zwischentauscher (20) genannt, verbunden ist, der einen durch mindestens einen Luftstrom gekühlten Druckluftstrom liefert, der aus einem Außenluftstrom, einem aus der Kabine auszubringenden Abluftstrom und deren Gemischen ausgewählt wird.

12. Fahrzeug nach einem der Ansprüche 9 bis 11, **dadurch gekennzeichnet, dass** es eine Regelungseinheit (30) beinhaltet, die angepasst ist, um die Drehgeschwindigkeit des Elektromotors (12) jedes Turbokompressors (11) in Abhängigkeit von einer Sollwärmeleistung anzusteuern, die in die Kabine (10) des Fahrzeugs zu liefern ist.

13. Fahrzeug nach einem der Ansprüche 9 bis 12, **dadurch gekennzeichnet, dass** die Einheit von gesteuerten Ventilen (40, 45, 49, 50, 55) und Leitungen angepasst ist, um ebenfalls entsprechend einem Betriebsmodus gesteuert werden zu können, der aus einem Heizmodus ausgewählt ist, bei dem:

- ein aus der Kabine auszubringender Abluftstrom dem Eingang des Kompressors des Turbokompressors zugeführt wird,
- die am Ausgang (19) des Kompressors (15) des Turbokompressors gelieferte druckbeaufschlagte und erwärmte Luft mindestens einen Tauscher (20, 23, 24) durchquert, der zwischen dem Luftausgang des Kompressors mindestens eines Turbkompressors und dem Lufteingang der Turbine des Turbokompressors eingestetzt ist,
- und die am Ausgang der Turbine des Turbokompressors gelieferte Luft mit einer Ausgangsöffnung (59) verbunden ist, um nach außen abgestoßen zu werden.

**Claims**

1. Method for supplying air at a controlled temperature to a cabin (10) of a surface vehicle in which at least one air cycle device is used, comprising:

- at least one turbocompressor (11) comprising:

  ◦ a rotating compressor (15),
  ◦ a rotating turbine (14),
  ◦ a shaft (13) coupling the turbine and the compressor such that the turbine is able to rotationally drive the compressor,
  ◦ an air inlet (18) of the compressor,
  ◦ an air outlet (19) of the compressor delivering an airflow compressed by the compressor,
  ◦ an air inlet (16) of the turbine arranged to receive a compressed airflow from the compressor,
  ◦ an air outlet (17) of the turbine delivering an expanded cold airflow,

- at least one exchanger (20, 23, 24, 32) interposed between the air outlet (19) of the compressor of at least one turbocompressor and the air inlet (16) of the turbine of at least one turbocompressor,

**characterised in that**:

- use is made of at least one turbocompressor (11) of at least one air cycle device comprising an electric motor (12) coupled to the compressor (15) so as to be able to deliver mechanical power to the compressor (15),
- the air inlet (18) of the compressor (15) of at least one turbocompressor of at least one air cycle device is arranged to receive air at a pressure greater than or equal to atmospheric pressure,
- each turbocompressor (11) of each air cycle device is associated with a set of controlled valves (40, 45, 49, 50, 55) and conduits, adapted to be able to be controlled in one operating mode selected at least from:

  ◦ a heat pump heating mode in which:

    ▪ the air inlet (18) of the compressor (15) is arranged to receive an expanded airflow from the turbine (14) via at least one heat exchanger, named intermediate heating exchanger (20), adapted to heat the expanded air delivered by the turbine (14) in contact with at least one air stream selected from an external air stream, a foul air stream to be vented out of the cabin, and mixtures thereof,
    ▪ the compressed and heated air delivered to the outlet (19) of the compressor (15) of the turbocompressor passes through a first circuit of a heat exchanger, named cabin heat exchanger, adapted to heat an airflow for supply to the cabin (10) of the vehicle passing through a second circuit of the cabin heat exchanger, an outlet of the first circuit of the cabin heat exchanger being connected to the air inlet (16) of the turbine,

  ◦ a cooling mode in which:

    ▪ the air inlet (18) of the compressor (15) is arranged to receive air external to the vehicle,
    ▪ the compressed air outlet (19) of the compressor (15) is connected to at least one heat exchanger, named intermediate exchanger (20), delivering a compressed air stream cooled by at least one air stream selected from an external air stream, a foul air stream to be vented out of the cabin, and mixtures thereof.

2. Method according to claim 1, **characterised in that** the turbine (14) of each turbocompressor is arranged to deliver an expanded airflow at a pressure greater than or equal to atmospheric pressure.

3. Method according to any one of claims 1 or 2, **characterised in that** in the cooling mode, the expanded cold airflow delivered by the air outlet (17) of the turbine is introduced into the cabin (10) of the vehicle.

4. Method according to one of claims 1 to 3, **characterised in that** in the heating mode, said airflow for supply to the cabin (10) of the vehicle is formed by at least one airstream selected from an external air stream, a recirculation airstream from the cabin of the vehicle, and mixtures thereof.

5. Method according to one of claims 1 to 4, **characterised in that** said set of controlled valves (40, 45, 49, 50, 55) and conduits is adapted to be able to be likewise controlled in an operating mode selected from a heating mode in which:

- a foul air stream to be vented out of the cabin is supplied to the inlet of the compressor of the turbocompressor,

- the compressed and heated air delivered to the outlet (19) of the compressor (15) of the turbocompressor passes through at least one exchanger (20, 23, 24) interposed between the air outlet of the compressor of at least one turbocompressor and the air inlet of the turbine of the turbocompressor,
- and the air delivered to the outlet of the turbine of the turbocompressor is connected to an outlet orifice (59) to be ejected to the outside.

6. Method according to one of claims 1 to 5, **characterised in that** the rotational speed of the electric motor (12) of each turbocompressor (11) is controlled based on a set thermal power to be delivered to the cabin (10) of the vehicle.

7. Method according to one of claims 1 to 6, **characterised in that** the moisture of the compressed air delivered to the air inlet (16) of the turbine (14) is extracted upstream of this air inlet (16).

8. Method according to claim 7, **characterised in that** the moisture is extracted by a moisture extraction loop (22) comprising a first circuit of a heating heat exchanger (23) receiving the compressed air stream from the intermediate cooling exchanger (20), a first circuit of a condensing heat exchanger (24), a liquid water extraction device (25), a second circuit of the heating heat exchanger (23) receiving the airflow delivered downstream of the liquid water extraction device (25) to heat it by the compressed airflow supplying the first circuit of the heating heat exchanger (23), and a second circuit of the condensing heat exchanger (24) receiving the expanded cold airflow delivered by the air outlet (17) of the turbine (14) to cool the compressed airflow passing through the first circuit of the condensing heat exchanger (24) so as to condense the moisture present in this compressed airflow.

9. Surface vehicle comprising at least one air cycle device, comprising:

    - at least one turbocompressor (11) comprising:

        ◦ a rotating compressor (15),
        ◦ a rotating turbine (14),
        ◦ a shaft (13) coupling the turbine and the compressor such that the turbine is able to rotationally drive the compressor,
        ◦ an air inlet (18) of the compressor (15),
        ◦ an air outlet (19) of the compressor (15) delivering an airflow compressed by the compressor,
        ◦ an air inlet (16) of the turbine (14) arranged to receive a compressed airflow from the compressor (15),
        ◦ an air outlet (17) of the turbine (14) delivering an expanded cold airflow,

    - at least one exchanger (20, 23, 24, 32) interposed between the air outlet of the compressor of at least one turbocompressor and the air inlet of the turbine of at least one turbocompressor,

    **characterised in that**:

    - at least one turbocompressor (11) of at least one air cycle device comprises an electric motor (12) coupled to the compressor (15) so as to be able to deliver mechanical power to the compressor,
    - the air inlet (18) of the compressor (15) of at least one turbocompressor of at least one air cycle device is arranged to receive air at a pressure greater than or equal to atmospheric pressure,
    - each turbocompressor (11) of each air cycle device is associated with a set of controlled valves (40, 45, 49, 50, 55) and conduits, adapted to be able to be controlled in one operating mode selected at least from:

        ◦ a heat pump heating mode in which:

            ▪ the air inlet (18) of the compressor (15) is arranged to receive an expanded airflow from the turbine (14) via at least one heat exchanger, named intermediate heating exchanger (20), adapted to heat the expanded air delivered by the turbine (14) in contact with at least one air stream selected from an external air stream, a foul air stream to be vented out of the cabin, and mixtures thereof,
            ▪ the compressed and heated air delivered to the outlet (19) of the compressor (15) of the turbocompressor passes through a first circuit of a heat exchanger, named cabin heat exchanger, adapted to heat an airflow for supply to the cabin (10) of the vehicle passing through a second circuit of the cabin heat exchanger, an outlet of the first circuit of the cabin heat exchanger being connected to the air inlet (16) of the turbine,

◦ a cooling mode in which:

- the air inlet (18) of the compressor (15) is arranged to receive air external to the vehicle,
- the compressed air outlet (19) of the compressor (15) is connected to at least one heat exchanger, named intermediate exchanger (20), delivering a compressed air stream cooled by at least one air stream selected from an external air stream, a foul air stream to be vented out of the cabin, and mixtures thereof.

**10.** Vehicle according to claim 9, **characterised in that** the turbine of each turbocompressor (11) is arranged to deliver an expanded airflow at a pressure greater than or equal to atmospheric pressure.

**11.** Vehicle according to any one of claims 9 or 10, **characterised in that** each air cycle device comprises a set of controlled valves (40, 45, 49, 50, 55) and conduits, and **in that** it comprises at least one control unit (30) adapted to be able to control each air cycle device in an operating mode selected from:

- a heating mode in which compressed and heated air delivered to the outlet (19) of the compressor (15) of the turbocompressor (11) passes through at least one first circuit of a heat exchanger adapted to heat an airflow for supply to the cabin (10) of the vehicle,
- a cooling mode in which:

◦ the air inlet (18) of the compressor (15) is arranged to receive air external to the vehicle,
◦ the compressed air outlet (19) of the compressor is connected to at least one heat exchanger, named intermediate cooling exchanger (20), delivering a compressed air stream cooled by at least one airstream selected from an external air stream, a foul air stream to be vented out of the cabin, and mixtures thereof.

**12.** Vehicle according to one of claims 9 to 11, **characterised in that** it comprises a control unit (30) adapted to control the rotational speed of the electric motor (12) of each turbocompressor (11) based on a set thermal power to be delivered to the cabin (10) of the vehicle.

**13.** Vehicle according to one of claims 9 to 12, **characterised in that** said set of controlled valves (40, 45, 49, 50, 55) and conduits is adapted to be able to be likewise controlled in an operating mode selected from a heating mode in which:

- a foul air stream to be vented out of the cabin is supplied to the inlet of the compressor of the turbocompressor,
- the compressed and heated air delivered to the outlet (19) of the compressor (15) of the turbocompressor passes through at least one exchanger (20, 23, 24) interposed between the air outlet of the compressor of at least one turbocompressor and the air inlet of the turbine of the turbocompressor,
- and the air delivered to the outlet of the turbine of the turbocompressor is connected to an outlet orifice (59) to be ejected to the outside.

Fig 1

Fig 2

Fig 3

Fig 4

**RÉFÉRENCES CITÉES DANS LA DESCRIPTION**

**Documents brevets cités dans la description**

- EP 0581237 A
- EP 1177961 A
- EP 1186501 A
- DE 102004063840
- GB 2237373 A